(19) Europäisches Patentamt
European Patent Office
Office européen des brevets

(11) EP 3 247 827 B1

(12) **FASCICULE DE BREVET EUROPEEN**

(45) Date de publication et mention de la délivrance du brevet:
**24.04.2019 Bulletin 2019/17**

(21) Numéro de dépôt: **16701016.4**

(22) Date de dépôt: **19.01.2016**

(51) Int Cl.:
***D02G 3/18*** (2006.01) ***C08J 5/08*** (2006.01)
***D02G 3/48*** (2006.01) ***B60C 9/00*** (2006.01)

(86) Numéro de dépôt international:
**PCT/EP2016/051033**

(87) Numéro de publication internationale:
**WO 2016/116457 (28.07.2016 Gazette 2016/30)**

(54) **RENFORT MULTI-COMPOSITE VERRE-RÉSINE À PROPRIÉTÉS AMÉLIORÉES**

GLAS-HARZ-MULTIVERBUNDSTOFF MIT VERBESSERTEN EIGENSCHAFTEN

GLASS-RESIN MULTICOMPOSITE REINFORCEMENT WITH IMPROVED PROPERTIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2015 FR 1550455**

(43) Date de publication de la demande:
**29.11.2017 Bulletin 2017/48**

(73) Titulaire: **Compagnie Générale des Etablissements Michelin**
**63000 Clermont-Ferrand (FR)**

(72) Inventeur: **DELFINO, Antonio**
**63040 Clermont-ferrand Cedex 9 (FR)**

(74) Mandataire: **Desbordes, Guillaume**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 167 080**
**WO-A1-2013/117474**
**WO-A1-2015/014578**
**WO-A1-2015/165777**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### 1. DOMAINE DE L'INVENTION

Le domaine de la présente invention est celui des renforts composites et des stratifiés multicouches utilisables notamment pour le renforcement de produits semi-finis ou d'articles finis en caoutchouc tels que des bandages pour véhicules, du type pneumatiques ou non pneumatiques.

Elle se rapporte plus particulièrement à des renforts composites à base de monobrins du type en « CVR » (abrégé pour Composite Verre-Résine) à hautes propriétés mécaniques et thermiques, comportant des fibres de verre multifilamentaires continues, unidirectionnelles, noyées dans une résine thermodurcie et utilisables en particulier comme éléments de renforcement de ces bandages.

### 2. ETAT DE LA TECHNIQUE

Les concepteurs de bandages sont depuis longtemps à la recherche de « renforts » (éléments de renforcement longilignes) du type textiles ou composites, à faible densité, pouvant se substituer avantageusement et efficacement aux fils ou câbles métalliques conventionnels, en vue de réduire notamment le poids de ces bandages et aussi de pallier les éventuels problèmes de corrosion.

Ainsi, le brevet EP 1 167 080 (ou US 7 032 637) a déjà décrit un monobrin en CVR à hautes propriétés mécaniques, comportant des fibres de verre continues, unidirectionnelles, imprégnées dans une résine réticulée du type vinylester. Ce monobrin en CVR présente, outre une contrainte de rupture en compression élevée, supérieure à sa contrainte de rupture en extension, un allongement à la rupture de l'ordre de 3,0 à 3,5% et un module initial en extension d'au moins 30 GPa ; sa résine thermodurcie présente une Tg (température de transition vitreuse) supérieure à 130°C et un module initial en extension d'au moins 3 GPa.

Grâce aux propriétés ci-dessus, ce brevet EP 1 167 080 a montré qu'il était avantageusement possible de substituer à des câbles d'acier de tels monobrins en CVR, disposés en particulier sous la bande de roulement en tronçons parallèles, comme nouveaux éléments de renforcement de ceintures de bandages pneumatiques, permettant d'alléger ainsi notablement la structure des pneumatiques.

L'expérience montre toutefois que les monobrins en CVR décrits dans les brevets ci-dessus peuvent être encore améliorés, en particulier pour leur utilisation dans les bandages pour véhicules.

On a constaté en particulier, de manière inattendue, que ces monobrins en CVR de l'art antérieur, lorsqu'ils étaient utilisés comme renforts de ceintures de certains bandages pneumatiques, pouvaient subir un certain nombre de casses en compression, par un effondrement visible de leur structure, au cours de la fabrication-même de ces bandages, en particulier au cours de l'étape de conformation et/ou de l'étape finale de cuisson en moule de ces bandages qui on le sait est conduite sous haute pression et à une température très élevée, typiquement supérieure à 160°C.

WO 2015/014578 et WO 2015/165777 sont des documents selon l'Article 54(3) CBE. WO 2015/014578 décrit un monobrin amélioré à très hautes propriétés pouvant constituer un élément constitutif du renfort multi-composite de l'invention, mais en aucun cas le renfort multi-composite lui-même est pourvu d'une couche externe thermoplastique. WO 2015/165777 décrit un renfort multi-composite comportant plusieurs monobrins en composite, le tout étant gainé d'une matière thermoplastique, mais en aucun cas un monobrin amélioré à très hautes propriétés tel que celui utilisé dans le renfort multi-composite de la présente invention.

### 3. BREVE DESCRIPTION DE L'INVENTION

Or, poursuivant leurs recherches, les Demanderesses ont découvert un renfort multi-composite nouveau, à base de monobrins en CVR à propriétés améliorées de température de transition vitreuse, d'allongement à la rupture et de module, qui plus est gainés par une couche de matière thermoplastique, qui confèrent à ce renfort des propriétés en compression, flexion ou sous cisaillement transverse (perpendiculairement à l'axe du renfort) qui sont notablement améliorées, en particulier sous une température élevée (typiquement supérieure à 150°C), par rapport à celles des monobrins en CVR de l'art antérieur.

Ainsi, selon un premier objet, la présente invention concerne (en référence aux figures 1 et 2 annexées) un renfort multi-composite **(R1, R2)** comportant un ou plusieurs monobrin(s) **(10)** en composite verre-résine comprenant des filaments de verre **(101)** noyés dans une résine thermodurcie **(102)** dont la température de transition vitreuse est notée $\mathbf{Tg_1}$, ledit renfort multi-composite étant caractérisé en ce que :

- une couche d'une matière thermoplastique **(12)** dont la température de transition vitreuse notée $\mathbf{Tg_2}$ est supérieure à 20°C, recouvre ledit monobrin ou, s'ils sont plusieurs, individuellement chaque monobrin ou collectivement la totalité ou au moins une partie des monobrins ;

- ledit monobrin ou, s'ils sont plusieurs, la totalité ou au moins une partie des monobrins présente les caractéristiques suivantes :

  - une température $\mathbf{Tg_1}$ égale ou supérieure à 190°C ;
  - un allongement à la rupture noté $\mathbf{A_{(M)}}$, mesuré à 20°C, égal ou supérieur à 4,0% ;
  - un module initial en extension noté $\mathbf{E_{(M)}}$, mesuré à 20°C, supérieur à 35 GPa.

Le caractère thermoplastique et donc thermofusible de la matière recouvrant les monobrins en CVR, permet en outre, très avantageusement, de fabriquer en quelque sorte par « collage ou assemblage thermique » une grande variété de renforts multi-composites (à plusieurs brins) ayant différentes formes et sections droites, ceci par fusion au moins partielle de la matière de recouvrement, puis refroidissement de l'ensemble des brins gainés de matière thermoplastique une fois ces derniers disposés ensemble, agencés de manière appropriée. L'invention concerne également tout stratifié multicouches comportant au moins un renfort multi-composite selon l'invention, disposé entre et au contact de deux couches de composition de caoutchouc, notamment de caoutchouc diénique.

L'invention concerne également l'utilisation d'un renfort multi-composite ou stratifié multicouches selon l'invention, comme élément de renforcement d'articles ou produits semi-finis en matière plastique ou en caoutchouc tels que des tuyaux, des courroies, des bandes transporteuses, des bandages, pneumatiques ou non pneumatiques, pour véhicules, ainsi que ces articles, produits semi-finis et bandages eux-mêmes, tant à l'état cru (c'est-à-dire avant cuisson ou vulcanisation) qu'à l'état cuit (après cuisson).

Les bandages de l'invention, en particulier, peuvent être destinés à des véhicules à moteur du type tourisme, 4x4, "SUV" (*Sport Utility Vehicles*), mais également à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules utilitaires de transport ou de manutention.

Le renfort multi-composite et le stratifié multicouches de l'invention sont tout particulièrement utilisables comme éléments de renforcement dans des armatures de sommet (ou ceintures) ou dans les armatures de carcasse de bandages, comme décrit notamment dans les documents EP 1 167 080 ou US 7 032 637 précités. Ils pourraient également être présents dans la zone bourrelet de tels bandages.

Le renfort multi-composite de l'invention est aussi avantageusement utilisable, en raison de sa faible densité et de ses propriétés en compression, flexion et sous cisaillement transverse qui sont améliorées, comme élément de renforcement dans les bandages ou roues flexibles du type non pneumatiques, c'est-à-dire supportés structurellement (sans pression interne). De tels bandages ou roues sont bien connus de l'homme du métier, on pourra se reporter notamment aux documents brevet EP 1 242 254 ou US 6 769 465, EP 1 359 028 ou US 6 994 135, US 7 201 194, WO 00/37269 ou US 6 640 859, WO 2007/085414, WO 2008/080535, WO 2009/033620, WO 2009/135561, WO 2012/032000, également à la publication « *Development of a Non-Pneumatic Wheel* », T.B. Rhyne and S.M. Cron, Tire Science and Technology, TSTCA, Vol. 34, No. 3, July-September 2006, pp. 150-169 ; lorsqu'ils sont associés à tout élément mécanique rigide destiné à assurer la liaison entre le bandage flexible et le moyeu d'une roue, ils remplacent l'ensemble constitué par le bandage pneumatique, la jante et le disque tels qu'on les connaît sur la plupart des véhicules routiers actuels. Le renfort multi-composite de l'invention est en particulier utilisable avantageusement dans les bandes ou couches annulaires de cisaillement (*« shear layer »*) formant ceinture de tels bandages.

L'invention ainsi que ses avantages seront aisément compris à la lumière de la description détaillée et des exemples de réalisation qui suivent, ainsi que des figures 1 à 9 relatives à ces exemples qui schématisent (sans respect d'une échelle spécifique) :

- en coupe transversale, un monobrin (10) en CVR utilisable dans un renfort multi-composite conforme à l'invention (Fig. 1) ;
- en coupe transversale, deux exemples (R-1 et R-2) de renforts multi-composites conformes à l'invention (Fig. 2a et Fig. 2b) ;
- en coupe transversale, un autre exemple (R-3) de renfort multi-composite conforme à l'invention (Fig. 3) ;
- en coupe transversale, un autre exemple (R-4) de renfort multi-composite conforme à l'invention (Fig. 4) ;
- en coupe transversale, un autre exemple (R-5) de renfort multi-composite conforme à l'invention (Fig. 5) ;
- en coupe transversale, un autre exemple (R-6) de renfort multi-composite conforme à l'invention (Fig. 6) ;
- en coupe transversale, un exemple (20) de stratifié multicouches selon l'invention comportant un renfort multi-composite selon l'invention (R-7) lui-même noyé dans une matrice de caoutchouc diénique (Fig. 7) ;
- un dispositif utilisable pour la fabrication d'un monobrin (10) en CVR utilisable comme élément constitutif de base d'un renfort multi-composite selon l'invention (Fig. 8) ;
- en coupe radiale, un exemple de bandage pneumatique selon l'invention, incorporant un renfort multi-composite et un stratifié multicouches selon l'invention (Fig. 9).

4. DESCRIPTION DETAILLEE DE L'INVENTION

Dans la présente demande, sauf indication expresse différente, tous les pourcentages (%) indiqués sont des pourcentages en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention concerne donc un renfort du type multi-composite, en d'autres termes un composite de composite, utilisable notamment pour le renforcement d'articles en caoutchouc tels que des bandages pour véhicules, qui a pour caractéristique essentielle de comporter au moins, tout d'abord un monobrin ou plusieurs monobrins **(10)** en composite verre-résine tels que schématisés à la figure 1, comprenant des filaments de verre **(101)** noyés dans une résine thermodurcie **(102)** dont la température de transition vitreuse est notée $\mathbf{Tg_1}$, ledit monobrin ou, s'ils sont plusieurs, la totalité ou au moins une partie des monobrins, présentant les caractéristiques essentielles suivantes :

- une température $\mathbf{Tg_1}$ égale ou supérieure à 190°C ;
- un allongement à la rupture $\mathbf{A_{(M)}}$, mesuré à 20°C, égal ou supérieur à 4,0% ; et
- un module initial en extension $\mathbf{E_{(M)}}$, mesuré à 20°C, supérieur à 35 GPa.

Typiquement, les filaments de verre sont présents sous la forme d'une fibre multifilamentaire unique ou de plusieurs fibres multifilamentaires (si elles sont plusieurs, elles sont de préférence essentiellement unidirectionnelles), chacune d'entre elles pouvant comporter plusieurs dizaines, centaines voire milliers de filaments de verre unitaires. Ces filaments unitaires très fins ont généralement et de préférence un diamètre moyen de l'ordre de 5 à 30 µm, plus préférentiellement de 10 à 20 µm.

Par « résine » ou « résine thermodurcie », on entend ici la résine en tant que telle et toute composition à base de cette résine et comportant au moins un additif (c'est-à-dire un ou plusieurs additifs). Cette résine est bien entendu réticulée (par exemple photodurcie et/ou durcie thermiquement), en d'autres termes sous la forme d'un réseau de liaisons tridimensionnelles, dans un état propre aux polymères dits thermodurcissables (par opposition aux polymères dits thermoplastiques).

La température $\mathbf{Tg_1}$ est de préférence supérieure à 195°C, plus préférentiellement supérieure à 200°C. Elle est mesurée (comme $\mathbf{Tg_2}$ et **Tf** décrites plus loin) de manière connue par DSC (*Differential Scanning Calorimetry*), au second passage, par exemple et sauf indications différentes spécifiées dans la présente demande, selon la norme ASTM D3418 de 1999 (appareil DSC "822-2" de Mettler Toledo ; atmosphère azote ; échantillons préalablement portés de la température ambiante (23°C) à 250°C (10°C/min), puis refroidis rapidement jusqu'à 23°C, avant enregistrement final de la courbe de DSC de 23°C à 250°C, selon une rampe de 10°C/min).

L'allongement à la rupture $\mathbf{A_{(M)}}$ du monobrin ou, s'ils sont plusieurs, de la totalité ou au moins une partie (de préférence la majorité, c'est-à-dire par définition la majorité en nombre) des monobrins, est de préférence supérieur à 4,2%, plus préférentiellement supérieur à 4,4%. Le module initial en extension $\mathbf{E_{(M)}}$ du monobrin ou, s'ils sont plusieurs, de la totalité ou au moins une partie (de préférence la majorité) des monobrins, est de préférence supérieur à 40 GPa, plus préférentiellement supérieur à 42 GPa.

Les propriétés mécaniques en extension (module **E** et allongement à la rupture **A**) sont mesurées de manière connue à l'aide d'une machine de traction « INSTRON » du type 4466 (logiciel BLUEHILL-2 fourni avec la machine de traction), selon la norme ASTM D 638, sur des monobrins en CVR ou des renforts multi-composites bruts de fabrication c'est-à-dire non encollés, ou bien encollés (c'est-à-dire prêts à l'emploi), ou encore extraits du produit semi-fini ou de l'article en caoutchouc qu'ils renforcent. Avant mesure, ces monobrins ou renforts multi-composites sont soumis à un conditionnement préalable (stockage pendant au moins 24 h dans une atmosphère standard selon la norme européenne DIN EN 20139 (température de 23 ± 2°C ; hygrométrie de 50 ± 5 %). Les échantillons testés subissent une traction sur une longueur initiale de 400 mm à une vitesse nominale de 100 m/min, sous une prétension standard de 0,5 cN/tex. Tous les résultats donnés sont une moyenne de 10 mesures.

Selon un autre mode de réalisation préférentiel, pour un compromis amélioré de propriétés thermiques et mécaniques du renfort de l'invention, la partie réelle du module complexe notée $\mathbf{E'_{190(M)}}$ du monobrin ou, s'ils sont plusieurs, de la totalité ou au moins une partie (de préférence la majorité) des monobrins, mesurée à 190°C par la méthode DTMA, est supérieure à 30 GPa. $\mathbf{E'_{190(M)}}$ est plus préférentiellement supérieure à 33 GPa, encore plus préférentiellement supérieure à 36 GPa.

Selon un mode de réalisation particulièrement préférentiel, dans les cas où plusieurs monobrins sont présents dans le renfort multi-composite de l'invention, chacun des monobrins présente les caractéristiques essentielles de $\mathbf{Tg_1}$, $\mathbf{A_{(M)}}$ et $\mathbf{E_{(M)}}$ telles qu'énoncées précédemment ; plus préférentiellement, chacun d'eux présente les caractéristiques préférentielles, notamment plus préférentielles, de $\mathbf{Tg_1}$, $\mathbf{A_{(M)}}$, $\mathbf{E_{(M)}}$ et $\mathbf{E'_{190(M)}}$ telles qu'énoncées ci-dessus.

Selon un autre mode de réalisation préférentiel, pour un compromis optimisé de propriétés thermiques et

mécaniques du renfort de l'invention, le rapport $\mathbf{E'_{(Tg2' - 25)(M)}}$ / $\mathbf{E'_{20(M)}}$ est supérieur à 0,85, de préférence supérieur à 0,90 ; $\mathbf{E'_{20(M)}}$ et $\mathbf{E'_{(Tg2' - 25)(M)}}$ représentent la partie réelle du module complexe du monobrin, mesurée par DMTA respectivement à 20°C et à une température exprimée en °C égale à ($Tg_2$' - 25), expression dans laquelle $\mathbf{Tg_2'}$ représente la température de transition vitreuse (Tg) mesurée cette fois par DMTA.

Selon un autre mode de réalisation plus préférentiel, le rapport $\mathbf{E'_{(Tg2' - 10)(M)}}$ / $\mathbf{E'_{20(M)}}$ est supérieur à 0,80, de préférence supérieur à 0,85, $\mathbf{E'_{(Tg2' - 10)(M)}}$ étant la partie réelle du module complexe du monobrin mesuré par DMTA à une température en °C égale à ($Tg_2$' - 10).

Les mesures de **E'** et $\mathbf{Tg_2'}$ sont effectuées de manière connue par DMTA (« *Dynamical Mechanical Thermal Analysis »),* avec un viscoanalyseur « $DMA^+$ 450 » de ACOEM (France), utilisant le logiciel « Dynatest 6.83 / 2010 » pilotant des essais de flexion, traction ou torsion.

Selon ce dispositif, le test de flexion trois points ne permettant pas de manière connue de rentrer les données géométriques initiales pour un monobrin de section circulaire, on peut seulement introduire la géométrie d'une section rectangulaire (ou carrée). Afin d'obtenir une mesure précise du module **E'** pour un monofilament de diamètre noté ici $\mathbf{D_M}$ (voir Fig. 1), on introduit donc par convention dans le logiciel une section carrée de côté « **a** » ayant le même moment d'inertie de surface, ceci afin de travailler à même raideur **R** des éprouvettes testées.

Les relations bien connues qui suivent doivent s'appliquer (E étant le module du matériau, $I_s$ le moment d'inertie de surface du corps considéré, et * le symbole de multiplication) :

$$\mathbf{R} = E_{composite} * I_{section\ circulaire} = E_{composite} * I_{section\ carrée}$$

avec :

$$I_{section\ circulaire} = \pi * \mathbf{D_M}^4 / 64 \quad \text{et } I_{section\ carrée} = \mathbf{a}^4 / 12$$

On en déduit aisément la valeur du côté « **a** » du carré équivalent de même inertie de surface que celle de la section (circulaire) du monobrin de diamètre $\mathbf{D_M}$**,** selon l'équation :

$$\mathbf{a} = \mathbf{D_M} * (\pi/6)^{0,25}.$$

Dans le cas où la section droite de l'échantillon testé n'est pas circulaire (ni rectangulaire), quelle que soit sa forme particulière, le même mode de calcul s'appliquera en déterminant préalablement le moment d'inertie de surface $I_s$ sur une coupe droite de l'échantillon testé.

L'éprouvette à tester, généralement de section circulaire et de diamètre $\mathbf{D_M}$**,** a une longueur de 35 mm. Elle est disposée horizontalement sur deux appuis distants de 24 mm. Une sollicitation répétée en flexion est appliquée perpendiculairement au centre de l'éprouvette, à mi-distance des deux appuis, sous la forme d'un déplacement vertical d'amplitude égale à 0,1 mm (déformation donc asymétrique, l'intérieur de l'éprouvette étant uniquement sollicité en compression et pas en extension), à une fréquence de 10 Hz.

Le programme suivant est ensuite appliqué : sous cette sollicitation dynamique, l'éprouvette est progressivement chauffée de 25°C à 260°C avec une rampe de 2°C/min. A la fin du test on obtient les mesures du module élastique E', du module visqueux E" et de l'angle de perte (δ) en fonction de la température (où E' est la partie réelle et E" la partie imaginaire du module complexe) ; $\mathbf{Tg_2'}$ est la température de transition vitreuse correspondant au maximum (pic) de tan(δ).

Selon un mode de réalisation préférentiel, le monobrin en CVR ou, s'ils sont plusieurs, la totalité ou au moins une partie (de préférence la majorité) des monobrins en CVR, présente une déformation élastique en compression sous flexion qui est supérieure à 3,0%, plus préférentiellement supérieure à 3,5%, en particulier supérieure à 4,0% ; selon un autre mode de réalisation préférentiel, leur contrainte de rupture en compression sous flexion est supérieure à 1 000 MPa, plus préférentiellement supérieure à 1 200 MPa, en particulier supérieure à 1 400 MPa.

Les propriétés ci-dessus en compression sous flexion sont mesurées sur les monobrins en CVR comme décrit dans le document EP 1 167 080 précité, par la méthode dite du test de boucle (D. Inclair, J. App. Phys. 21, 380, 1950). Dans le cas présent, on réalise une boucle que l'on amène progressivement au point de rupture. La nature de la rupture, facilement observable en raison de la grande taille de la section, permet immédiatement de se rendre compte que le monobrin, sollicité en flexion jusqu'à rupture, se rompt du côté où la matière est en extension, ce que l'on identifie par simple observation. Etant donné que dans ce cas les dimensions de la boucle sont importantes, il est possible à tout instant de lire le rayon du cercle inscrit dans la boucle. Le rayon du cercle inscrit juste avant le point de rupture correspond au rayon de courbure critique, désigné par Rc.

La formule suivante permet ensuite de déterminer par le calcul la déformation élastique critique notée Ec (où r correspond au rayon du monobrin, c'est-à-dire $D_M/2$) :

$$Ec = r / (Rc + r)$$

La contrainte de rupture en compression sous flexion notée $\sigma_c$ est obtenue par le calcul par la formule suivante (où E est le module initial en extension) :

$$\boldsymbol{\sigma_c} = Ec * E$$

Lorsque la rupture de la boucle apparaît dans la partie en extension, on peut en conclure que, en flexion, la contrainte de rupture en compression est supérieure à la contrainte de rupture en extension.

On peut également procéder à la rupture en flexion d'un barreau rectangulaire selon la méthode dite des trois points (ASTM D 790). Cette méthode permet également de vérifier, visuellement, que la nature de la rupture est bien en extension.

Selon un mode de réalisation préférentiel, la contrainte de rupture en compression pure est supérieure à 700 MPa, plus préférentiellement supérieure à 900 MPa, en particulier supérieure à 1 100 MPa. Pour éviter le flambage du monobrin en CVR sous compression, cette grandeur est mesurée selon la méthode décrite dans la publication « Critical compressive stress for continuous fiber unidirectional composites » de Thompson et al, Journal of Composite Materials, 46 (26), 3231-3245.

Préférentiellement, dans chaque monobrin en CVR ou, s'ils sont plusieurs, dans la totalité ou au moins une partie (de préférence la majorité) des monobrins en CVR, le taux d'alignement des filaments de verre est tel que plus de 85% (% en nombre) des filaments ont une inclinaison par rapport à l'axe du monobrin qui est inférieure à 2,0 degrés, plus préférentiellement inférieure à 1,5 degrés, cette inclinaison (ou défaut d'alignement) étant mesuré comme décrit dans la publication ci-dessus de Thompson et al.

Préférentiellement, dans le renfort multi-composite de l'invention, le monobrin en CVR ou, s'ils sont plusieurs, la totalité ou au moins une partie (de préférence la majorité) des monobrins en CVR présente un taux pondéral de filaments de verre qui est compris entre 60 et 80%, plus préférentiellement entre 65 et 75%.

Ce taux pondéral est calculé en faisant le rapport du titre de la fibre de verre initiale sur le titre du monobrin en CVR final. Le titre (ou densité linéique) est déterminé sur au moins trois échantillons, chacun correspondant à une longueur de 50 m, par pesée de cette longueur ; le titre est donné en tex (poids en grammes de 1000 m de produit - pour rappel, 0, 111 tex équivaut à 1 denier).

Selon un autre mode de réalisation préférentiel, dans le renfort multi-composite de l'invention, le monobrin en CVR ou, s'ils sont plusieurs, la totalité ou au moins une partie (de préférence la majorité) des monobrins en CVR présente une densité (ou masse volumique en $g/cm^3$) qui est comprise entre 1,8 et 2,1. Elle est mesurée (à 23°C) à l'aide d'une balance spécialisée de la société Mettler Toledo de type « PG503 DeltaRange » ; les échantillons, de quelques cm, sont successivement pesés dans l'air et plongés dans de l'éthanol ; le logiciel de l'appareil détermine ensuite la densité moyenne sur trois mesures.

Le diamètre noté $\mathbf{D_M}$ du monobrin en CVR, ou de chaque monobrin en CVR s'ils sont plusieurs, est de préférence compris entre 0,2 et 2,0 mm, plus préférentiellement entre 0,3 et 1,5 mm.

Cette définition couvre aussi bien des mono filaments de forme essentiellement cylindrique (à section droite circulaire) que des monofilaments de forme différente, par exemple des monofilaments oblongs (de forme plus ou moins aplatie) ou de section droite rectangulaire. Dans le cas d'une section non circulaire et sauf indication spécifique différente, $\mathbf{D_M}$ est par convention le diamètre dit d'encombrement, c'est-à-dire le diamètre du cylindre de révolution imaginaire enveloppant le monobrin, en d'autres termes le diamètre du cercle circonscrit entourant sa section droite.

La résine utilisée est par définition une résine réticulable (i.e., durcissable) susceptible d'être réticulée, durcie par toute méthode connue, en particulier par un rayonnement UV (ou UV-visible), de préférence émettant dans un spectre allant au moins de 300 nm à 450 nm.

A titre de résine réticulable, on utilise de préférence une résine polyester ou vinylester, plus préférentiellement une résine vinylester. Par résine "polyester", on entend de manière connue une résine du type polyester insaturé. Les résines vinylester sont quant à elles bien connues dans le domaine des matériaux composites.

Sans que cette définition soit limitative, la résine vinylester est préférentiellement du type époxyvinylester. On utilise plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique.

De préférence, le module initial en extension de la résine une fois thermodurcie (réticulée), mesuré à 20°C,

est supérieur à 3,0 GPa, plus préférentiellement supérieur à 3,5 GPa.

Une résine époxyvinylester à base novolaque (partie entre crochets dans la formule I ci-dessous) répond par exemple, de manière connue, à la formule (I) qui suit :

(I)

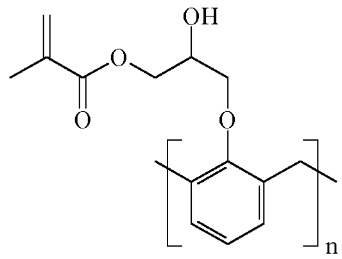

Une résine époxyvinylester à base bisphénolique A (partie entre crochets de la formule (II) ci-dessous) répond par exemple à la formule (le "A" rappelant que le produit est fabriqué à l'aide d'acétone):

(II)

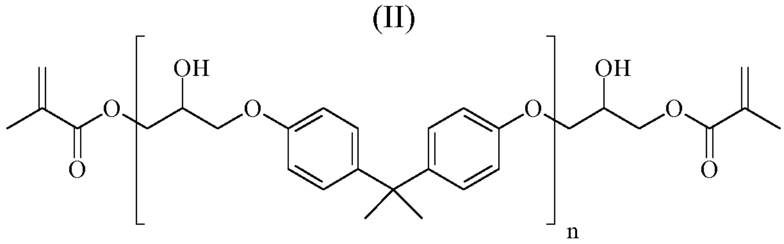

Une résine époxyvinylester de type novolaque et bisphénolique a montré d'excellents résultats. A titre d'exemple d'une telle résine, on peut citer notamment les résines vinylester « ATLAC 590 » et « E-Nova FW 2045 » de la société DSM (diluées avec environ 40% de styrène) décrites par exemple dans les demandes EP-A-1 074 369 et EP-A-1 174 250. Des résines époxyvinylester sont disponibles auprès d'autres fabricants tels que par exemple AOC (USA - résines « VIPEL »).

Selon une autre caractéristique essentielle de l'invention, comme déjà indiqué, une couche d'une matière thermoplastique **(12)** recouvre le monobrin en CVR ou, s'ils sont plusieurs, individuellement chaque monobrin ou collectivement la totalité ou au moins une partie (de préférence la majorité) des monobrins, pour constituer le renfort multi-composite de l'invention.

On a constaté que la présence de cette gaine, couche de matière thermoplastique conférait aux monobrins en CVR et donc au renfort multi-composite de l'invention des propriétés d'endurance en compression, flexion ou sous cisaillement transverse (perpendiculairement à l'axe du monobrin) qui sont notablement améliorées, en particulier à une température élevée (typiquement supérieure à 150°C), par rapport à celles des monobrins en CVR de l'art antérieur.

La température de transition vitreuse $\mathbf{Tg_2}$ de cette matière thermoplastique **(12)** est supérieure à 20°C ; elle est préférentiellement supérieure à 50°C, plus préférentiellement supérieure à 70°C. Sa température de fusion (notée **Tf**) est préférentiellement supérieure à 150°C, plus préférentiellement supérieure à 200°C.

De préférence, l'épaisseur minimale (notée $\mathbf{E_m}$) telle que schématisée par exemple à la figure 2, de la couche de matière thermoplastique recouvrant le monobrin ou chaque monobrin s'ils sont plusieurs, est comprise entre 0,05 et 0,5 mm, plus préférentiellement entre 0,1 et 0,4 mm, en particulier entre 0,1 et 0,3 mm.

De préférence, toutes les grandeurs ci-après étant mesurées à 20°C, le module initial en extension de cette matière thermoplastique (12) est compris entre 500 et 2500 MPa, plus préférentiellement entre 500 et 1500 MPa ; son allongement élastique est de préférence supérieur à 5%, plus préférentiellement supérieur à 8%, en particulier supérieur à 10% ; son allongement à la rupture est de préférence supérieur à 10%, plus préférentiellement à 15%, en particulier supérieur à 20%.

Typiquement, la matière thermoplastique est un polymère ou une composition polymérique (c'est-à-dire une composition à base d'au moins un polymère et d'au moins un additif).

Ce polymère thermoplastique est choisi de préférence dans le groupe constitué par les polyamides, les polyesters, les polyimides et les mélanges de tels polymères, plus particulièrement dans le groupe constitué par les polyesters, les polyétherimides et les mélanges de tels polymères.

Parmi les polyamides aliphatiques, on peut citer notamment les polyamides 4-6, 6, 6-6, 11 ou 12. Le polymère

thermoplastique est préférentiellement un polyester ; parmi les polyesters, on peut citer plus particulièrement les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Selon un autre mode de réalisation préférentiel, le polymère thermoplastique est un polyétherimide (PEI), par exemple le produit « ULTEM 1000 » de la société GE Plastics.

Au polymère ou mélange de polymères ci-dessus, peuvent être éventuellement ajoutés, pour constituer une composition polymérique, divers additifs tels que colorant, charge, plastifiant, antioxydant ou autre stabilisant. On pourra avantageusement ajouter à la matière thermoplastique ci-dessus, des composants compatibles, de préférence eux-mêmes thermoplastiques, susceptibles de favoriser l'adhésion à une matrice de caoutchouc diénique, par exemple des élastomères TPS (thermoplastiques styréniques) du type insaturés, notamment époxydés, tels que décrits par exemple dans les demandes WO 2013/117474 et WO 2013/117475.

L'allongement à la rupture noté $\mathbf{A_{(R)}}$, mesuré à 20°C, du renfort multi-composite de l'invention est de préférence égal ou supérieur à 3,0 %, plus préférentiellement égal ou supérieur à 3,5%. Son module initial en extension noté $\mathbf{E_{(R)}}$, mesuré à 20°C, est de préférence supérieur à 9 GPa, plus préférentiellement supérieur à 12 GPa.

La figure 2 schématise, en coupe transversale, deux exemples (**R-1** et **R-2**) de renforts multi-composites conformes à l'invention, dans lesquels un seul monobrin en CVR (10) tel que décrit précédemment, par exemple de diamètre $\mathbf{D_M}$ égal à 1 mm, a été recouvert par sa couche, gaine de matière thermoplastique, par exemple en polyester tel que PET, d'épaisseur minimale notée $\mathbf{E_m}$ (par exemple égale à environ 0,2 mm) ; dans ces deux exemples, la section droite du renfort multi-composite est soit rectangulaire (ici essentiellement carrée) soit circulaire (respectivement Fig. 2a et Fig. 2b).

Le diamètre (pour la Fig. 2a) ou l'épaisseur (pour la Fig. 2b) noté(e) $\mathbf{D_R}$ de ces renforts **R-1** et **R-2** de l'invention, égal(e) à $\mathbf{D_M+2\ E_m}$, est donc environ 1,4 mm dans ces deux exemples.

Grâce à la présence combinée de ses filaments de verre (101), de sa matrice thermodurcie (102) et de la gaine thermoplastique (12) remplissant en quelque sorte une fonction de frettage du monobrin en CVR (10), le renfort multi-composite de l'invention (**R-1, R-2**) se caractérise par une cohésion transversale améliorée, une haute stabilité dimensionnelle, mécanique et thermique.

Dans le cas où plusieurs monobrins en CVR sont utilisés, la couche ou gaine thermoplastique peut être déposée individuellement sur chacun des monobrins comme illustré par exemple aux figures 2, 5 et 6, ou bien déposée collectivement sur plusieurs des monobrins disposés de manière appropriée, par exemple alignés selon une direction principale, comme illustré par exemple aux figures 3, 4 et 7.

La figure 3 schématise, en coupe transversale, un autre exemple d'un renfort multi-composite **(R-3)** dans lequel deux monobrins en CVR (10), sensiblement de même diamètre (par exemple égal à environ 1 mm), ont été recouverts ensemble d'une gaine de matière thermoplastique (12), par exemple en polyester tel que PET, d'épaisseur minimale $\mathbf{E_m}$ (par exemple égale à environ 0,25 mm). Dans ces exemples, la section droite du renfort multi-composite est rectangulaire, d'épaisseur $\mathbf{D_R}$ égale à $\mathbf{D_M}$+2 $\mathbf{E_m}$, soit par exemple de l'ordre de 1,5 mm.

La figure 4 schématise, en coupe transversale, un autre exemple d'un renfort multi-composite **(R-4)** dans lequel quatre monobrins en CVR (10), sensiblement de même diamètre (par exemple égal à environ 0,5 mm) ont été recouverts d'une gaine de matière thermoplastique, par exemple en polyester tel que PET, pour constituer un renfort multi-composite de section droite sensiblement carrée, d'épaisseur $\mathbf{D_R}$.

Le caractère thermoplastique et donc thermofusible de la matière (12) recouvrant chaque brin (10) en CVR, permet très avantageusement de fabriquer par collage thermique une grande variété de renforts multi-composites à plusieurs brins, ayant différentes formes et sections droites, ceci par fusion au moins partielle de la matière de recouvrement, puis refroidissement de l'ensemble des brins (10) gainés de matière thermoplastique (12) une fois ces derniers disposés ensemble, agencés de manière appropriée. Cette fusion au moins partielle sera conduite à une température préférentiellement comprise entre la température de fusion **Tf** de la matière thermoplastique (12) et la température de transition vitreuse $\mathbf{Tg_2}$ de la résine thermodurcie (102).

Ainsi, la figure 5 schématise, en coupe transversale, un autre exemple d'un renfort multi-composite **(R-5)** selon l'invention dans lequel deux renforts multi-composites élémentaires **R-2** tels que schématisés à la figure 2 (Fig. 2b) ont été mis au contact, collés, soudés ensemble par fusion superficielle de leur gaine thermoplastique (12) puis étape de refroidissement pour obtention de ce renfort **R-5** d'épaisseur $\mathbf{D_R}$.

La figure 6 reproduit un autre exemple d'un renfort multi-composite selon l'invention dans lequel trois renforts multi-composites élémentaires **R-2** tels que schématisés à la figure 2 (Fig. 2b) ont été alignés, mis au contact, puis collés, soudés ensemble par fusion superficielle de leur gaine thermoplastique puis refroidissement, pour obtention d'un autre renfort multi-composite **(R-6)** de section droite d'épaisseur $\mathbf{D_R}$.

L'invention concerne également un stratifié multicouches comportant au moins un renfort multi-composite selon l'invention tel que décrit précédemment, disposé entre et au contact de deux couches de composition de caoutchouc ou élastomère, notamment diénique.

Dans la présente demande, on entend de manière connue, par :

- "stratifié" ou "stratifié multicouches", au sens de la classification internationale des brevets : tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage ;
- caoutchouc "diénique" : tout élastomère (élastomère seul ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

La figure 7 représente un exemple d'un tel stratifié multicouches (20) comportant un renfort multi-composite **(R-7),** constitué de trois monobrins en CVR (10a, 10b, 10c) (tels que schématisés à la Fig. 1) noyés collectivement dans leur gaine thermoplastique (12), ce renfort selon l'invention **R-7** étant lui-même enrobé par une gaine (14) d'élastomère par exemple diénique, pour constituer un stratifié multicouches conforme à l'invention.

Ce stratifié multicouches léger et performant, insensible à la corrosion, permet de remplacer avantageusement, dans les bandages pour véhicules, les nappes conventionnelles en caoutchouc renforcées de câbles d'acier ou de câblés textiles conventionnels.

Grâce en outre à la présence d'une quantité notable de matière thermoplastique, ce stratifié de l'invention présente l'avantage d'être faiblement hystérétique comparativement à de tels tissus conventionnels. Or, un objectif majeur des manufacturiers de bandages est justement d'abaisser l'hystérèse de leurs constituants pour réduire la résistance au roulement de ces bandages.

Chaque couche de composition de caoutchouc, ou ci-après "couche de caoutchouc", constitutive du stratifié multicouches du bandage de l'invention est à base d'au moins un élastomère, de préférence du type diénique.

Cet élastomère diénique est de préférence choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique, des résines plastifiantes à haute température de transition vitreuse, des agents de mise en oeuvre, des résines tackifiantes, des agents antiréversion, des accepteurs et donneurs de méthylène, des résines renforçantes, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone ou de la silice, est de préférence supérieur à 50 pce, notamment compris entre 50 et 150 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 $m^2/g$, de préférence de 30 à 400 $m^2/g$.

L'homme de l'art saura, à la lumière de la présente description, ajuster la formulation de la composition de

caoutchouc afin d'atteindre les niveaux de propriétés (notamment module d'élasticité) souhaités, et adapter la formulation à l'application spécifique envisagée.

De préférence, la composition de caoutchouc présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées convenir particulièrement pour le renforcement des ceintures de bandages de pneumatiques. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Selon un mode de réalisation préférentiel, dans le stratifié multicouches de l'invention, la couche thermoplastique (12) est pourvue d'une couche adhésive au regard de chaque couche de composition de caoutchouc avec laquelle elle est au contact.

Pour faire adhérer le caoutchouc à cette matière thermoplastique, on pourra utiliser tout système adhésif approprié, par exemple une simple colle textile du type "RFL" (résorcinol-formaldéhyde-latex) comportant au moins un élastomère diénique tel que du caoutchouc naturel, ou toute colle équivalente connue pour conférer une adhésion satisfaisante entre du caoutchouc et des fibres thermoplastiques conventionnelles telles que des fibres en polyester ou en polyamide, comme par exemple les compositions adhésives décrites dans les demandes WO 2013/017421, WO 2013/017422, WO 2013/017423.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four ou tunnel chauffant (par exemple pendant 30 s à 180°C) et enfin traitement thermique (par exemple pendant 30 s à 230°C).

Avant l'encollage ci-dessus, il peut être avantageux d'activer la surface de la matière thermoplastique, par exemple par voie mécanique et/ou physique et/ou chimique, pour améliorer sa prise de colle et/ou son adhésion finale au caoutchouc. Un traitement mécanique pourra consister par exemple en une étape préalable de matage ou de rayage de la surface ; un traitement physique pourra consister par exemple en un traitement par un rayonnement tel qu'un faisceau d'électrons ; un traitement chimique pourra par exemple consister en un passage préalable dans un bain de résine époxy et/ou de composé isocyanate.

La surface de la matière thermoplastique étant en règle générale lisse, il peut être également avantageux d'ajouter un épaississant à la colle utilisée, afin d'améliorer la prise totale de colle du renfort multi-composite lors de son encollage.

L'homme du métier comprendra aisément que la connexion entre la couche de polymère thermoplastique du renfort multi-composite de l'invention et chaque couche de caoutchouc avec laquelle il est au contact dans le stratifié multicouches de l'invention, est assurée définitivement lors de la cuisson (réticulation) finale de l'article en caoutchouc, notamment bandage, auquel se destine le stratifié.

Il va sans dire que dans tous les exemples particuliers de l'invention précédemment décrits et schématisés aux figures 1 à 7, les monobrins en CVR, de diamètre $\mathbf{D_M}$ et à section droite circulaire, pourraient être remplacés par des monobrins en CVR de forme différente, par exemple à section droite rectangulaire (y compris carrée) ou autre (par exemple ovale), $\mathbf{D_M}$ représentant alors par convention le diamètre dit d'encombrement, c'est-à-dire le diamètre du cercle circonscrivant leur section droite.

## 5. EXEMPLES DE REALISATION DE L'INVENTION

On décrit ci-après des exemples de fabrication de monobrins en CVR convenant à l'invention, puis de renforts multi-composites et de stratifiés multicouches selon l'invention à base de ces monobrins en CVR, enfin leur utilisation comme éléments de renforcement de bandages pneumatiques.

Les monobrins en CVR convenant à l'invention peuvent être préparés selon un procédé comportant les étapes principales suivantes :

- réaliser un arrangement rectiligne de fibres (filaments) de verre et entraîner cet arrangement dans une direction d'avancement :
- dans une chambre à vide, dégazer l'arrangement de fibres par l'action du vide ;
- en sortie de la chambre à vide, après dégazage, traverser une chambre d'imprégnation sous vide de manière à imprégner ledit arrangement de fibres par une résine ou composition de résine thermodurcissable, à l'état liquide, pour obtenir un imprégné contenant les filaments de verre et la résine ;
- faire passer ledit imprégné au travers d'une filière de calibrage ayant une section de surface et de forme prédéfinies, pour lui imposer une forme de monobrin (par exemple un mono filament de section droite ronde ou un ruban de section droite rectangulaire) ;

- en aval de la filière, dans une chambre d'irradiation UV, polymériser la résine sous l'action des UV ;
- puis enrouler pour stockage le monobrin ainsi obtenu.

Toutes les étapes ci-dessus (arrangement, dégazage, imprégnation, calibrage, polymérisation et enroulage final) sont des étapes connues de l'homme du métier, ainsi que les matières (fibres multifilamentaires et compositions de résine) utilisées ; elles ont par exemple été décrites dans l'une et/ou l'autre des demandes EP-A-1 074 369 et EP-A-1 174 250 précitées.

On rappellera notamment qu'avant toute imprégnation des fibres, doit être conduite une étape essentielle de dégazage de l'arrangement de fibres par l'action du vide, afin notamment de renforcer l'efficacité de l'imprégnation ultérieure et surtout de garantir l'absence de bulles à l'intérieur du monobrin composite final.

Après traversée de la chambre à vide, les filaments de verre entrent dans une chambre d'imprégnation qui est totalement pleine de résine d'imprégnation, donc dépourvue d'air : c'est en ce sens qu'on peut qualifier cette étape d'imprégnation d'« imprégnation sous vide ».

La résine (composition de résine) d'imprégnation comporte de préférence un photo-initiateur sensible (réactif) aux UV au-delà de 300 nm, de préférence entre 300 et 450 nm. Ce photo-initiateur est utilisé à un taux préférentiel de 0,5 à 3%, plus préférentiellement de 1 à 2,5%. Elle peut également comporter un agent de réticulation, par exemple à un taux compris entre 5% et 15% (% en poids de composition d'imprégnation).

De préférence, ce photo-initiateur est de la famille des composés phosphine, plus préférentiellement un oxyde de bis(acyl)phosphine comme par exemple l'oxyde de bis-(2,4,6-triméthylbenzoyl)-phénylphosphine ("Irgacure 819" de la société BASF) ou un oxyde de mono(acyl)phosphine (par exemple "Esacure TPO" de la société Lamberti), de tels composés phosphine pouvant être utilisés en mélange avec d'autres photo-initiateurs, par exemple des photo-initiateurs de type alpha-hydroxy-cétone tels que par exemple la diméthylhydroxy-acétophénone (e.g. « Esacure KL200 » de Lamberti) ou la 1-hydroxy-cyclohexyl-phényl-cétone (e.g. « Esacure KS300 » de Lamberti), des benzophénones telles que la 2,4,6-triméthylbenzophénone (e.g. « Esacure TZT » de Lamberti) et/ou des dérivés de thioxanthones comme par exemple l'isopropylthioxanthone (e.g. « Esacure ITX » de Lamberti).

La filière dite "de calibrage" permet, grâce à une section droite de dimensions déterminées, généralement et de préférence circulaire ou rectangulaire, d'ajuster la proportion de résine par rapport aux fibres de verre tout en imposant à l'imprégné la forme et l'épaisseur visées pour le monobrin.

La chambre de polymérisation ou d'irradiation UV a ensuite pour fonction de polymériser, réticuler la résine sous l'action des UV. Elle comporte un ou de préférence plusieurs irradiateurs UV, constitué(s) par exemple chacun par une lampe UV de longueur d'onde de 200 à 600 nm.

Le monobrin en CVR ainsi formé à travers la chambre d'irradiation UV, dans lequel la résine est maintenant à l'état solide, est ensuite récolté par exemple sur une bobine de réception sur laquelle il peut être enroulé sur une très grande longueur.

Entre la filière de calibrage et le support de réception finale, on préfère maintenir les tensions subies par les fibres de verre à un niveau modéré, de préférence compris entre 0,2 et 2,0 cN/tex, plus préférentiellement entre 0,3 et 1,5 cN/tex ; pour contrôler cela, on pourra par exemple mesurer ces tensions directement en sortie de la chambre d'irradiation, à l'aide de tensiomètres appropriés bien connus de l'homme du métier.

Outre les étapes connues précédemment décrites, le procédé pour fabriquer le monobrin en CVR convenant à l'invention comporte les étapes essentielles qui suivent :

- la vitesse **($V_{ir}$)** de passage du monobrin dans la chambre d'irradiation est supérieure à 50 m/min ;
- la durée **($D_{ir}$)** de passage du monobrin dans la chambre d'irradiation est égale ou supérieure à 1,5 s ;
- la chambre d'irradiation comporte un tube transparent aux UV (tel qu'un tube en quartz ou de préférence en verre), dit tube d'irradiation, à travers lequel circule le monobrin en cours de formation, ce tube étant parcouru par un courant de gaz inerte, de préférence de l'azote.

Si ces étapes essentielles ne sont pas combinées, les propriétés améliorées du monobrin convenant à l'invention, notamment **$Tg_1$,** allongement **$A_{(M)}$** et module **$E_{(M)}$,** ne peuvent pas être atteintes.

En particulier, en l'absence de balayage de gaz neutre tel que de l'azote dans le tube d'irradiation, on a constaté que les propriétés ci-dessus étant dégradées assez rapidement en cours de fabrication et donc que la performance industrielle n'était plus garantie.

Par ailleurs, si la durée d'irradiation **$D_{ir}$** du monobrin dans la chambre d'irradiation est trop courte (inférieure à 1,5 s), de nombreux essais ont révélé (voir résultats du tableau unique annexé, selon des tests conduits à différentes vitesses **$V_{ir}$** supérieures à 50 m/min) que soit les valeurs **$Tg_1$** étaient insuffisantes, inférieures à 190°C, soit les valeurs **$A_{(M)}$** étaient trop faibles, inférieures à 4,0%.

On a constaté en outre qu'une vitesse d'irradiation **$V_{ir}$** élevée (supérieure à 50 m/min, de préférence comprise entre 50 et 150 m/min) était favorable d'une part à un excellent taux d'alignement des filaments de verre à l'intérieur du

monobrin en CVR, d'autre part à un meilleur maintien du vide dans la chambre à vide avec un risque nettement réduit de voir remonter une certaine fraction de résine d'imprégnation de la chambre d'imprégnation vers la chambre à vide, et donc à une meilleure qualité d'imprégnation.

Le diamètre du tube d'irradiation (de préférence en verre) est préférentiellement compris entre 10 et 80 mm, plus préférentiellement entre 20 et 60 mm.

Préférentiellement, la vitesse $\mathbf{V_{ir}}$ est comprise entre 50 et 150 m/min, plus préférentiellement dans un domaine de 60 à 120 m/min.

Préférentiellement, la durée d'irradiation $\mathbf{D_{ir}}$ est comprise entre 1,5 et 10 s, plus préférentiellement dans un domaine de 2 à 5 s.

Selon un autre mode de réalisation préférentiel, la chambre d'irradiation comporte une pluralité d'irradiateurs (ou radiateurs) UV, c'est-à-dire au moins deux (deux ou plus de deux) qui sont disposés en ligne autour du tube d'irradiation. Chaque irradiateur UV comporte typiquement une (au moins une) lampe UV (émettant de préférence dans un spectre de 200 à 600 nm) et un réflecteur parabolique au foyer duquel se trouve le centre du tube d'irradiation ; il délivre une puissance linéique préférentiellement comprise entre 2 000 et 14 000 watts par mètre. Plus préférentiellement encore, la chambre d'irradiation comporte au moins trois, en particulier au moins quatre irradiateurs UV en ligne.

Encore plus préférentiellement, la puissance linéique délivrée par chaque irradiateur UV est comprise entre 2 500 et 12 000 watts par mètre, en particulier comprise dans un domaine de 3 000 à 10 000 watts par mètre.

Des radiateurs UV convenant au procédé de l'invention sont bien connus de l'homme du métier, par exemple ceux commercialisés par la société Dr. Hönle AG (Allemagne) sous la référence « 1055 LCP AM UK », équipés de lampes « UVAPRINT » (lampes au mercure haute pression dopé au fer). La puissance nominale (maximale) de chaque radiateur de ce type est égale à environ 13 000 Watts, la puissance délivrée effectivement pouvant être réglée avec un potentiomètre entre 30 et 100% de la puissance nominale.

De préférence, la température de la résine (composition de résine), dans la chambre d'imprégnation, est comprise entre 50°C et 95°C, plus préférentiellement entre 60°C et 90°C.

Selon un autre mode de réalisation préférentiel, les conditions d'irradiation sont ajustées de telle manière que la température du monobrin en CVR, en sortie de la chambre d'imprégnation, soit supérieure à la Tg ($Tg_1$) de la résine réticulée ; plus préférentiellement, cette température est supérieure à la Tg ($Tg_1$) de la résine réticulée et inférieure à 270°C.

La figure 8 annexée schématise très simplement un exemple d'un dispositif 100 permettant la production de monobrins en CVR (10) tels que schématisés à la figure 1.

On y voit une bobine 110 contenant, dans l'exemple illustré, des fibres de verre 111 (sous forme de multifilaments). La bobine est déroulée en continu par entraînement, de manière à réaliser un arrangement rectiligne 112 de ces fibres 111. En général, les fibres de renforcement sont livrées en "rovings", c'est à dire déjà en groupes de fibres enroulées en parallèle sur une bobine ; par exemple, on utilise des fibres commercialisées par Owens Corning sous la désignation de fibre "Advantex", de titre égal à 1200 tex (pour rappel, 1 tex correspond à 1 g/1000 m de fibre). C'est par exemple la traction exercée par la réception tournante 126 qui va permettre l'avancement des fibres en parallèle et du monobrin en CVR tout le long de l'installation 100.

Cet arrangement 112 traverse ensuite une chambre à vide 113 (reliée à une pompe à vide non représentée), disposée entre une tubulure d'entrée 113a et une tubulure de sortie 113b débouchant sur une chambre d'imprégnation 114, les deux tubulures de préférence à paroi rigide ayant par exemple une section minimale supérieure (typiquement deux fois plus) à la section totale de fibres et une longueur très supérieure (typiquement 50 fois plus) à ladite section minimale.

Comme déjà enseigné par la demande EP-A-1 174 250 précitée, l'utilisation de tubulures à paroi rigide, aussi bien pour l'orifice d'entrée dans la chambre à vide que pour l'orifice de sortie de la chambre à vide et le transfert depuis la chambre à vide jusqu'à la chambre d'imprégnation, s'avère compatible à la fois avec des cadences élevées de passage des fibres au travers des orifices sans rompre les fibres, mais aussi permet d'assurer une étanchéité suffisante. Il suffit, au besoin expérimentalement, de rechercher la plus grande section de passage, compte tenu de la section totale des fibres à traiter, permettant encore d'offrir une étanchéité suffisante, compte tenu de la vitesse d'avancement des fibres et de la longueur des tubulures. Typiquement, le vide à l'intérieur de la chambre 113 est par exemple de l'ordre de 0,1 bar, la longueur de la chambre à vide est d'environ 1 mètre.

En sortie de la chambre à vide 113 et de la tubulure de sortie 113b , l'arrangement 112 de fibres 111 traverse une chambre d'imprégnation 114 comportant un réservoir d'alimentation 115 (relié à une pompe doseuse non représentée) et un réservoir d'imprégnation 116 étanche totalement rempli de composition d'imprégnation 117 à base d'une résine durcissable du type vinylester (e.g., "E-Nova FW 2045" de DSM). A titre d'exemple, la composition 117 comporte en outre (à un taux pondéral de 1 à 2%) un agent photo-initiateur approprié pour le rayonnement UV et/ou UV-visible par lequel la composition sera ultérieurement traitée, par exemple l'oxyde de bis-(2,4,6-triméthylbenzoyl)-phénylphosphine ("Irgacure 819" de la société BASF). Elle peut également comporter (par exemple environ 5% à 15 %) d'un agent réticulant tel que par exemple le tris(2-hydroxy éthyl)isocyanurate triacrylate (« SR 368 » de la société Sartomer). Bien

entendu, la composition d'imprégnation 117 est à l'état liquide.

Préférentiellement, la longueur de la chambre d'imprégnation est de plusieurs mètres, par exemple comprise entre 2 et 10 m, en particulier entre 3 et 5 m.

Ainsi, ressort de la chambre d'imprégnation 114, dans une tubulure de sortie 118 étanche (toujours sous vide primaire), un imprégné qui comporte par exemple (% en poids) de 65 à 75% de fibres solides 111, le reste (25 à 35%) étant constitué par la matrice liquide d'imprégnation 117.

L'imprégné passe ensuite à travers des moyens de calibrage 119 comportant au moins une filière de calibrage 120 dont le canal (non représenté ici), par exemple de forme circulaire, rectangulaire ou encore conique, est adapté aux conditions particulières de réalisation. A titre d'exemple, ce canal a une section droite minimale de forme circulaire dont l'orifice aval a un diamètre légèrement supérieur à celui du monobrin visé. Ladite filière a une longueur qui est typiquement supérieure d'au moins 100 fois à la dimension minimale de la section minimale. Elle a pour fonction d'assurer une grande précision dimensionnelle au produit fini, elle peut également jouer un rôle de dosage du taux de fibre par rapport à la résine. Selon une variante de réalisation possible, la filière 120 peut être directement intégrée à la chambre d'imprégnation 114, ce qui évite par exemple l'emploi de la tubulure de sortie 118.

Préférentiellement, la longueur de la zone de calibrage est de plusieurs centimètres, par exemple comprise entre 5 et 50 cm, en particulier entre 5 et 20 cm.

Grâce aux moyens de calibrage (119, 120) est obtenu à ce stade un monobrin composite "liquide" (121), liquide au sens que sa résine d'imprégnation est à ce stade toujours liquide, dont la forme de la section droite est préférentiellement essentiellement circulaire.

En sortie des moyens de calibrage (119, 120), le monobrin composite liquide (121) ainsi obtenu est ensuite polymérisé par passage à travers une chambre d'irradiation UV (122) comportant un tube en verre étanche (123) à travers lequel circule le monobrin composite ; ledit tube, dont le diamètre est typiquement de quelques cm (par exemple 2 à 3 cm), est irradié par une pluralité (ici, par exemple au nombre de 4) d'irradiateurs UV (124) en ligne (lampes "UVAprint" de la société Dr. Hönle, de longueur d'onde 200 à 600 nm) disposés à courte distance (quelques cm) du tube en verre. Préférentiellement, la longueur de la chambre d'irradiation est de plusieurs mètres, par exemple comprise entre 2 et 15 m, en particulier entre 3 et 10 m. Le tube d'irradiation 123 est dans cet exemple parcouru par un courant d'azote.

Les conditions d'irradiation sont préférentiellement ajustées de telle manière que, en sortie de la chambre d'imprégnation, la température du monobrin en CVR, mesurée en surface de ce dernier (par exemple à l'aide d'un thermocouple), soit supérieure à la Tg ($Tg_1$) de la résine réticulée (en d'autres termes supérieure à 190°C), et plus préférentiellement inférieure à 270°C.

Une fois la résine polymérisée (durcie), le monobrin en CVR (125), cette fois à l'état solide, entraîné dans le sens de la flèche F, arrive ensuite sur sa bobine de réception finale (126).

On obtient finalement un bloc composite terminé de fabrication tel que schématisé à la figure 1, sous la forme d'un monobrin en CVR continu (10), de très grande longueur, dont les filaments de verre unitaires (101) sont répartis de manière homogène dans tout le volume de résine durcie (102). Son diamètre est par exemple égal à environ 1 mm. Le procédé décrit ci-dessus peut être mise en oeuvre à haute vitesse, de préférence supérieure à 50 m/min, par exemple entre 50 et 150 m/min.

Avantageusement, avant dépôt de la gaine de matière thermoplastique (12), le monobrin (10) en CVR ainsi obtenu peut être soumis à un traitement d'adhérisation afin d'améliorer l'adhésion ultérieure entre la résine thermodurcie (102) précédemment décrite et la gaine thermoplastique (12). Un traitement chimique approprié pourra par exemple consister en un passage préalable dans un bain aqueux à base de résine époxy et/ou composé isocyanate, suivi d'au moins un traitement thermique visant à éliminer l'eau et polymériser la couche adhésive.

De tels traitements d'adhérisation sont bien connus de l'homme du métier. On procédera par exemple à une opération d'encollage par passage dans un bain aqueux (environ 94% d'eau) essentiellement à base de résine époxy (polyglycérol polyglycidyl éther « DENACOL » EX-512 de Nagase ChemteX Corporation, environ 1%) et de composé isocyanate (bloqué caprolactame, « GRILBOND » IL-6 de EMS, environ 5%), étape d'encollage suivie d'un séchage (30 s à 185°C) puis d'un traitement thermique (30 s à 200°C).

Une fois le monobrin (10) en CVR ainsi terminé et encollé, ce dernier est gainé, recouvert de manière connue d'une couche de matière thermoplastique (12), par exemple par passage du monobrin, voire le cas échéant de plusieurs monobrins disposés parallèlement, à travers une tête d'extrusion appropriée délivrant la matière thermoplastique à l'état fondu.

L'étape de gainage ou recouvrement par la matière thermoplastique (12) est conduite de manière connue par l'homme du métier. Elle consiste par exemple simplement à faire passer le ou chaque monobrin en CVR à travers une ou des filières de diamètre adapté, dans des têtes d'extrusion chauffées à des températures appropriées, ou encore dans un bain d'enduction contenant la matière thermoplastique mise préalablement en solution dans un solvant (ou mélange de solvants) organique approprié.

A titre d'exemple, le recouvrement d'un monobrin en CVR de diamètre proche de 1 mm par une couche de

PET d'épaisseur minimale $\mathbf{E_m}$ égale à environ 0,2 mm, pour l'obtention d'un renfort multi-composite ayant un diamètre total d'environ 1,4 mm, est réalisé sur une ligne d'extrusion-gainage comportant deux filières, une première filière (contre-filière ou filière amont) de diamètre égal à environ 1,05 mm et une seconde filière (ou filière aval) de diamètre égal à environ 1,45 mm, disposées toutes deux dans une tête d'extrusion portée à environ 290°C.

Le PET (« Artenius Design + » de la société Artenius ; $\mathbf{Tg_2}$ égale à environ 76°C ; **Tf** égale à environ 230°C) est fondu à une température de 280°C dans l'extrudeuse, recouvre ainsi le monobrin en CVR, par le biais de la tête de gainage, à une vitesse de défilement du fil égale typiquement à plusieurs dizaines de m/min, pour un débit de pompe d'extrusion typiquement de plusieurs dizaines de $cm^3$/min. En sortie de ce premier gainage, le fil peut être immergé dans un bac de refroidissement rempli d'eau froide, pour solidifier et figer le polyester dans son état amorphe, puis séché par exemple en ligne par une buse d'air, ou par passage de la bobine de réception à l'étuve.

En sortie de la tête d'extrusion, le ou les brins ainsi gainés sont ensuite refroidis suffisamment de manière à solidifier la couche de matière thermoplastique, par exemple avec de l'air ou un autre gaz froid, ou par passage dans un bain d'eau suivi d'une étape de séchage.

Le renfort multi-composite de l'invention ainsi obtenu, tel que schématisé par exemple sur la figure 2b, a les propriétés finales suivantes : $\mathbf{D_M}$ égal à environ 1,0 mm ; $\mathbf{E_m}$ égale à environ 0,2 mm ; $\mathbf{D_R}$ égal à environ 1,4 mm ; $\mathbf{Tg_1}$ égale à environ 205°C ; $\mathbf{Tg_2}$ égale à environ 76°C ; $\mathbf{A_{(M)}}$ égal à environ 4,5 % ; $\mathbf{E_{(M)}}$ égal à environ 43 GPa ; $\mathbf{E_{(R)}}$ égal à environ 14 GPa ; $\mathbf{E'_{190(M)}}$ égal à environ 37 GPa ; $\mathbf{E'_{(Tg1 - 25)}}$ / $\mathbf{E'_{20(M)}}$ égal à environ 0,92 ; déformation élastique en compression sous flexion du monobrin égale à environ 3,6 % ; contrainte de rupture en compression sous flexion du monobrin égale à environ 1350 MPa ; taux pondéral de fibres de verre dans le monobrin égal à environ 70% ; module initial en extension de la résine vinylester thermodurcie, à 20°C, égal à environ 3,6 GPa ; module initial en extension du PET (à 20°C) égal à environ 1100 MPa.

Le renfort multi-composite de l'invention ainsi fabriqué est avantageusement utilisable, notamment sous la forme d'un stratifié multicouches conforme à l'invention, pour le renforcement de bandages, pneumatiques ou non pneumatiques, de tous types de véhicules, en particulier de véhicules tourisme ou véhicules industriels tels que Poids-lourd, Génie civil, avions, autres véhicules de transport ou de manutention.

A titre d'exemple, la figure 9 représente de manière très schématique (sans respect d'une échelle spécifique), une coupe radiale d'un bandage pneumatique, conforme ou non à l'invention dans cette représentation générale.

Ce bandage pneumatique 200 comporte un sommet 202 renforcé par une armature de sommet ou ceinture 206, deux flancs 203 et deux bourrelets 204, chacun de ces bourrelets 204 étant renforcé avec une tringle 205. Le sommet 202 est surmonté d'une bande de roulement non représentée sur cette figure schématique. Une armature de carcasse 207 est enroulée autour des deux tringles 205 dans chaque bourrelet 204, le retournement 208 de cette armature 207 étant par exemple disposé vers l'extérieur du pneumatique 200 qui est ici représenté monté sur sa jante 209. Bien entendu, ce bandage pneumatique 200 comporte en outre de manière connue une couche de gomme 201, communément appelée gomme ou couche d'étanchéité, qui définit la face radialement interne du bandage et qui est destinée à protéger la nappe de carcasse de la diffusion d'air provenant de l'espace intérieur au bandage pneumatique.

L'armature de carcasse 207, dans les bandages de l'art antérieur, est généralement constituée d'au moins une nappe de caoutchouc renforcée par des renforts textiles ou métalliques dits "radiaux", c'est-à-dire que ces renforts sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 204 et passe par le milieu de l'armature de sommet 206).

La ceinture 206 est par exemple constituée, dans les bandages de l'art antérieur, par au moins deux nappes de caoutchouc dites "nappes de travail" ou "nappes de triangulation", superposées et croisées, renforcées de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au bandage pneumatique une rigidité de dérive élevée. La ceinture 206 peut comporter en outre dans cet exemple une nappe de caoutchouc dite "nappe de frettage" renforcée par des fils de renforcement dits "circonférentiels", c'est-à-dire que ces fils de renforcement sont disposés pratiquement parallèles les uns aux autres et s'étendent sensiblement circonférentiellement autour du bandage pneumatique de manière à former un angle préférentiellement compris dans un domaine de 0 à 10° avec le plan circonférentiel médian. Ces fils de renforcement circonférentiels ont notamment pour fonction de résister à la centrifugation du sommet à haute vitesse.

Un bandage pneumatique 200, lorsqu'il est conforme à l'invention, a pour caractéristique préférentielle qu'au moins sa ceinture (206) et/ou son armature de carcasse (207) comporte un stratifié multicouches selon l'invention, constitué d'au moins un renfort multi-composite selon l'invention disposé entre et au contact de deux couches de composition de caoutchouc diène. Selon un mode de réalisation particulier de l'invention, ce renfort multi-composite de l'invention peut être utilisé sous la forme de tronçons parallèles disposés sous la bande de roulement, comme décrit dans le brevet EP 1 167 080 précité. Selon un autre exemple de réalisation possible de l'invention, c'est la zone bourrelet qui peut être renforcée d'un tel renfort multi-composite ; ce sont par exemple les tringles (205) qui pourraient être

constituées, en tout ou partie, d'un renfort multi-composite selon l'invention.

Dans ces exemples de la figure 9, les compositions de caoutchouc utilisées pour les stratifiés multicouches selon l'invention, sont par exemple des compositions conventionnelles pour calandrage de renforts textiles, typiquement à base de caoutchouc naturel, de noir de carbone ou de silice, d'un système de vulcanisation et des additifs usuels. Grâce à l'invention, comparativement aux compositions de caoutchouc renforcées de câbles d'acier, elles peuvent être avantageusement dépourvues de sel métallique tel qu'un sel de cobalt. L'adhésion entre le renfort multi-composite de l'invention et la couche de caoutchouc qui l'enrobe peut être assurée de manière simple et connue, par exemple par une colle usuelle du type RFL (résorcinol-formol-latex), ou à l'aide de colle plus récentes telles que décrites par exemple dans les demandes précitées WO 2013/017421, WO 2013/017422, WO 2013/017423.

Des tests particuliers en bandages pneumatiques ont été réalisés, où des renforts multi-composites selon l'invention tels que fabriqués précédemment ont été utilisés comme renforts longilignes, c'est-à-dire non câblés, dans des nappes de travail croisées à la place de câbles en acier conventionnels, comme décrit dans le document précité EP 1 167 080. Ces tests ont démontré clairement que les renforts multi-composites de l'invention, grâce à leurs propriétés en compression améliorées, ne subissaient pas de casses en compression au cours de la fabrication-même de ces bandages pneumatiques, contrairement aux monobrins en CVR de l'art antérieur tels que décrits dans EP 1 167 080.

Tout en allégeant notablement les bandages pneumatiques et supprimant les risques liés à la corrosion, par rapport à des bandages dont la ceinture est conventionnellement renforcée de câbles d'acier, les renforts multi-composites de l'invention ont révélé aussi comme autre avantage notable celui de ne pas augmenter le bruit de roulage des bandages pneumatiques, contrairement aux autres solutions (renforts) textiles connues. Ces renforts multi-composites de l'invention ont également montré une excellente performance comme renforts circonférentiels dans des bandages du type non pneumatiques tels que décrits en introduction du présent mémoire.

En conclusion, les avantages du stratifié multicouches et du renfort multi-composite de l'invention sont nombreux (faible épaisseur, faible densité, faible coût, insensibilité à la corrosion) comparativement à des tissus métalliques conventionnels, et les résultats obtenus grâce à l'invention (en particulier des propriétés en compression améliorées) leur ouvrent un très grand nombre d'applications possibles, notamment en tant qu'élément de renforcement de la ceinture de bandages, disposé entre la bande de roulement et l'armature de carcasse. L'invention concerne également tout article fini ou produit semi-fini en matière plastique ou en caoutchouc comportant un renfort multi-composite ou un stratifié multicouches conformes à l'invention. L'invention concerne plus particulièrement un bandage, pneumatique ou non pneumatique, le renfort multi-composite ou le stratifié multicouches étant présent dans la ceinture du bandage ou dans l'armature de carcasse du bandage, ou dans la zone bourrelet du bandage.

**Tableau**

| $D_{ir}$ (s) | $Tg_1$ (°C) | $A_{(M)}$ (%) |
|---|---|---|
| Essai 1 | | |
| 1.2 | 186.1 | 3.4 |
| 1.3 | 188.8 | 3.8 |
| 1.45 | 189.1 | 3.9 |
| 1.7 | 194.8 | 4.3 |
| 2.0 | 195.7 | 4.5 |
| Essai 2 | | |
| 1.5 | 190.0 | 4.0 |
| 1.65 | 192.7 | 4.1 |
| 1.8 | 195.0 | 4.1 |
| 2.0 | 199.2 | 4.3 |
| Essai 3 | | |
| 2.0 | 192.8 | 4.3 |
| 2.4 | 193.7 | 4.5 |
| 3.0 | 196.9 | 4.6 |
| 4.0 | 195.0 | 4.7 |

(suite)

| Essai 4 | | |
|---|---|---|
| 1.0 | 184.7 | 4.3 |
| 1.2 | 187.3 | 4.2 |
| 1.6 | 190.5 | 4.2 |
| 2.0 | 200.5 | 4.3 |

**Revendications**

1. Renfort multi-composite (**R1, R2**) comportant un ou plusieurs monobrin(s) **(10)** en composite verre-résine (CVR) comprenant des filaments de verre **(101)** noyés dans une résine thermodurcie **(102)** dont la température de transition vitreuse est notée $\mathbf{Tg_1}$**, caractérisé en ce que** :

   - une couche d'une matière thermoplastique **(12)** dont la température de transition vitreuse notée $\mathbf{Tg_2}$**,** mesurée selon la norme ASTM D3418 de 1999, est supérieure à 20°C, recouvre ledit monobrin ou, s'ils sont plusieurs, individuellement chaque monobrin ou collectivement la totalité ou au moins une partie des monobrins ;
   - ledit monobrin ou, s'ils sont plusieurs, la totalité ou au moins une partie des monobrins présente les caractéristiques suivantes :

     ▪ une température $\mathbf{Tg_1}$**,** mesurée selon la norme ASTM D3418 de 1999, égale ou supérieure à 190°C ;
     ▪ un allongement à la rupture noté $\mathbf{A_{(M)}}$, mesuré à 20°C et selon la norme ASTM D638, égal ou supérieur à 4,0% ; et
     ▪ un module initial en extension noté $\mathbf{E_{(M)}}$, mesuré à 20°C et selon la norme ASTM D638, supérieur à 35 GPa.

2. Renfort multi-composite selon la revendication 1, dans lequel $\mathbf{Tg_1}$ est supérieure à 195°C, de préférence supérieure à 200°C, et dans lequel $\mathbf{Tg_2}$ est supérieure à 50°C, de préférence supérieure à 70°C.

3. Renfort multi-composite selon l'une quelconque des revendications 1 ou 2, dans lequel $\mathbf{A_{(M)}}$ est supérieur à 4,2 %, de préférence supérieur à 4,4%, et $\mathbf{E_{(M)}}$ est supérieur à 40 GPa, de préférence supérieur à 42 GPa.

4. Renfort multi-composite selon l'une quelconque des revendications 1 à 3, dans lequel ledit monobrin ou, s'ils sont plusieurs, la totalité ou au moins une partie des monobrins présente une partie réelle du module complexe notée $\mathbf{E'_{190(M)}}$, mesurée à 190°C par la méthode Dynamical Mechanical Thermal Analysis, qui est supérieure à 30 GPa.

5. Renfort multi-composite selon l'une quelconque des revendications 1 à 4, dans lequel le rapport $\mathbf{E'_{(Tg2' - 25)(M)}}$ / $\mathbf{E'_{20(M)}}$ est supérieur à 0,85, de préférence supérieur à 0,90, $\mathbf{E'_{20(M)}}$ et $\mathbf{E'_{(Tg2' - 25)(M)}}$ étant la partie réelle du module complexe dudit monobrin ou, s'ils sont plusieurs, de la totalité ou d'au moins une partie des monobrins, mesurée par la méthode Dynamical Mechanical Thermal Analysis, respectivement à 20°C et à une température exprimée en °C égale à ($\mathbf{Tg_2'}$ - 25), et $\mathbf{Tg_2'}$ étant la température de transition vitreuse de la résine mesurée par la méthode Dynamical Mechanical Thermal Analysis.

6. Renfort multi-composite selon l'une quelconque des revendications 1 à 5, dans lequel le rapport $\mathbf{E'_{(Tg2' - 10)(M)}}$ / $\mathbf{E'_{20(M)}}$ est supérieur à 0,80, de préférence supérieur à 0,85, $\mathbf{E'_{20(M)}}$ et $\mathbf{E'_{(Tg2' - 10)(M)}}$ étant la partie réelle du module complexe dudit monobrin ou, s'ils sont plusieurs, de la totalité ou d'au moins une partie des monobrins, mesurée par la méthode Dynamical Mechanical Thermal Analysis, respectivement à 20°C et à une température exprimée en °C égale à ($\mathbf{Tg_2'}$ - 10), et $\mathbf{Tg_2'}$ étant la température de transition vitreuse de la résine mesurée par la méthode Dynamical Mechanical Thermal Analysis.

7. Renfort multi-composite selon l'une quelconque des revendications 1 à 6, dans lequel ledit monobrin ou, s'ils sont plusieurs, la totalité ou au moins une partie d'entre eux présente :

   - une déformation élastique en compression sous flexion qui est supérieure à 3,0%, de préférence supérieure à 3,5%; et

- une contrainte de rupture en compression sous flexion qui est supérieure à 1 000 MPa, de préférence supérieure à 1 200 MPa.

**8.** Renfort multi-composite selon l'une quelconque des revendications 1 à 7, dans lequel ledit monobrin ou, s'ils sont plusieurs, la totalité ou au moins une partie d'entre eux présente un taux pondéral de filaments de verre qui est compris entre 60 et 80% et une masse volumique qui est comprise entre 1,8 et 2,1 g/$cm^3$.

**9.** Renfort multi-composite selon l'une quelconque des revendications 1 à 8, dans lequel la résine thermodurcie **(102)** dudit monobrin, ou, s'ils sont plusieurs, de la totalité ou d'au moins une partie des monobrins est une résine vinylester, ayant de préférence un module initial en extension, mesuré à 20°C, qui est supérieur à 3,0 GPa.

**10.** Renfort multi-composite selon l'une quelconque des revendications 1 à 9, dans lequel le diamètre noté $\mathbf{D_M}$ dudit monobrin ou de chaque monobrin s'ils sont plusieurs est compris entre 0,2 et 2,0 mm, de préférence entre 0,3 et 1,5 mm, et l'épaisseur minimale notée $\mathbf{E_m}$ de la couche de matière thermoplastique recouvrant ledit monobrin ou chaque monobrin s'ils sont plusieurs, est comprise entre 0,05 et 0,5 mm, de préférence entre 0,1 et 0,4 mm.

**11.** Renfort multi-composite selon l'une quelconque des revendications 1 à 10, dans lequel la matière thermoplastique est un polymère ou une composition de polymère, le polymère étant choisi préférentiellement dans le groupe constitué par les polyamides, les polyesters, les polyimides et les mélanges de tels polymères.

**12.** Renfort multi-composite selon l'une quelconque des revendications 1 à 11, dans lequel :

- le module initial en extension de la matière thermoplastique, mesuré à 20°C, est compris entre 500 et 2500 MPa, de préférence entre 500 et 1500 MPa ;
- l'allongement élastique de la matière thermoplastique, mesuré à 20°C, est supérieur à 5%, de préférence supérieur à 8% ; et
- l'allongement à la rupture de la matière thermoplastique, mesuré à 20°C, est supérieur à 10%, de préférence supérieur à 15%.

**13.** Renfort multi-composite selon l'une quelconque des revendications 1 à 12, dont l'allongement à la rupture noté $\mathbf{A_{(R)}}$, mesuré à 20°C, du renfort multi-composite est égal ou supérieur à 3,0 %, de préférence égal ou supérieur à 3,5%, et dont le module initial en extension noté $\mathbf{E_{(R)}}$, mesuré à 20°C, du renfort multi-composite est supérieur à 9 GPa, de préférence supérieur à 12 GPa.

**14.** Bandage, pneumatique ou non pneumatique, comportant un renfort multi-composite selon l'une quelconque des revendications 1 à 13.

**15.** Bandage selon la revendication 14, le renfort multi-composite étant présent dans la ceinture du bandage, dans l'armature de carcasse ou dans la zone bourrelet du bandage.

**Patentansprüche**

**1.** Multiverbundstoff-Verstärkung (R1, R2), umfassend einen oder mehrere Einzelstränge (10) aus Glas-Harz-Verbundstoff (CVR), umfassend Glasfasern (101), die in einem thermogehärteten Harz (102) eingebettet sind, dessen Glasübergangstemperatur mit $Tg_1$ bezeichnet wird, **dadurch gekennzeichnet, dass**:

- eine Schicht aus einem thermoplastischen Material (12), dessen Glasübergangstemperatur, die mit $Tg_2$ bezeichnet wird, gemessen gemäß der Norm ASTM D3418 aus 1999, über 20 °C liegt, den Einzelstrang bedeckt, oder, wenn es mehrere sind, einzeln jeden Einzelstrang oder kollektiv die Gesamtheit oder mindestens einen Teil der Einzelstränge bedeckt;
- der Einzelstrang, oder, wenn es mehrere sind, die Gesamtheit oder mindestens ein Teil der Einzelstränge die folgenden Charakteristiken aufweist:

  - eine Temperatur $Tg_1$, gemessen gemäß der Norm ASTM D3418 aus 1999, größer oder gleich 190 °C;
  - eine Reißdehnung, die mit $A_{(M)}$ bezeichnet wird, gemessen bei 20 °C und gemäß der Norm ASTM D638, größer oder gleich 4, %; und
  - einen Initialdehnungsmodul, der mit $E_{(M)}$ bezeichnet wird, gemessen bei 20 °C und gemäß der Norm

ASTM D638, größer 35 GPa.

**2.** Multiverbundstoff-Verstärkung nach Anspruch 1, wobei $Tg_1$ größer als 195 °C ist, vorzugsweise größer als 200 °C, und wobei $Tg_2$ größer als 50 °C ist, vorzugsweise größer als 70 °C.

**3.** Multiverbundstoff-Verstärkung nach einem der Ansprüche 1 oder 2, wobei $A_{(M)}$ größer ist als 4,2 %, vorzugsweise größer als 4,4 %, und $E_{(M)}$ größer ist als 40 GPa, vorzugsweise größer als 42 GPa.

**4.** Multiverbundstoff-Verstärkung nach einem der Ansprüche 1 bis 3, wobei der Einzelstrang, oder, wenn es mehrere sind, die Gesamtheit oder mindestens ein Teil der Einzelstränge einen reellen Teil des Komplexmoduls, der mit $E'_{190(M)}$ bezeichnet wird, gemessen bei 190 °C gemäß der Methode Dynamical Mechanical Thermal Analysis, aufweist, der größer ist als 30 GPa.

**5.** Multiverbundstoff-Verstärkung nach einem der Ansprüche 1 bis 4, wobei das Verhältnis $E'_{(Tg2'-25)\ (M)} / E'_{20\ (M)}$ größer ist als 0,85, vorzugsweise größer als 0,90, wobei $E'_{20\ (M)}$ und $E^*(_{Tg2'-25)\ (M)}$ sind: der reelle Teil des Komplexmoduls des Einzelstrangs, oder, wenn es mehrere sind, der Gesamtheit oder mindestens eines Teils der Einzelstränge, gemessen durch die Methode Dynamical Mechanical Thermal Analysis, jeweils bei 20 °C und bei einer Temperatur, ausgedrückt in °C, gleich ($Tg_2$' - 25), und wobei $Tg_2$' die Glasübergangstemperatur des Harzes ist, gemessen durch die Methode Dynamical Mechanical Thermal Analysis.

**6.** Multiverbundstoff-Verstärkung nach einem der Ansprüche 1 bis 5, wobei das Verhältnis $E'_{(Tg2'-10)(M)} / E'_{20(M)}$ größer ist als 0,80, vorzugsweise größer als 0,85, wobei $E'_{20(M)}$ und $E'_{(Tg2'-10)(M)}$ sind: der reelle Teil des Komplexmoduls des Einzelstrangs, oder, wenn es mehrere sind, der Gesamtheit oder mindestens eines Teils der Einzelstränge, gemessen durch die Methode Dynamical Mechanical Thermal Analysis, jeweils bei 20 °C und bei einer Temperatur, ausgedrückt in °C, gleich ($Tg_2$' - 10), und wobei $Tg_2$' die Glasübergangstemperatur des Harzes ist, gemessen durch die Methode Dynamical Mechanical Thermal Analysis.

**7.** Multiverbundstoff-Verstärkung nach einem der Ansprüche 1 bis 6, wobei der Einzelstrang, oder, wenn es mehrere sind, die Gesamtheit oder mindestens ein Teil davon aufweist:

- eine elastische Druckbiegeverformung, die größer ist als 3,0 %, vorzugsweise größer als 3,5 %; und
- eine Reißdruckbiegespannung, die größer ist als 1000 MPa, vorzugsweise größer als 1200 MPa.

**8.** Multiverbundstoff-Verstärkung nach einem der Ansprüche 1 bis 7, wobei der Einzelstrang, oder, wenn es mehrere sind, die Gesamtheit oder mindestens ein Teil davon einen Gewichtsanteil von Glasfasern, der zwischen 60 und 80 % liegt, und eine Volumenmasse, die zwischen 1,8 und 2,1 g/$cm^3$ liegt, aufweist.

**9.** Multiverbundstoff-Verstärkung nach einem der Ansprüche 1 bis 8, wobei das thermogehärtete Harz (102) des Einzelstrangs, oder, wenn es mehrere sind, der Gesamtheit oder mindestens eines Teils der Einzelstränge ein Vinylester-Harz ist, das vorzugsweise einen Initialdehnungsmodul, gemessen bei 20 °C, aufweist, der größer ist als 3,0 GPa.

**10.** Multiverbundstoff-Verstärkung nach einem der Ansprüche 1 bis 9, wobei der mit $D_M$ bezeichnete Durchmesser des Einzelstrangs oder jedes Einzelstrangs, wenn es mehrere sind, zwischen 0,2 und 2,0 mm liegt, vorzugsweise zwischen 0,3 und 1,5 mm, und die mit $E_m$ bezeichnete minimale Dicke der Schicht aus thermoplastischem Material, welche den Einzelstrang oder jeden Einzelstrang, wenn es mehrere sind, bedeckt, zwischen 0,05 und 0,5 mm liegt, vorzugsweise zwischen 0,1 und 0,4 mm.

**11.** Multiverbundstoff-Verstärkung nach einem der Ansprüche 1 bis 10, wobei das thermoplastische Material ein Polymer oder eine Polymerzusammensetzung ist, wobei das Polymer vorzugsweise ausgewählt ist aus der Gruppe bestehend aus Polyamiden, Polyestern, Polyimiden und Mischungen solcher Polymere.

**12.** Multiverbundstoff-Verstärkung nach einem der Ansprüche 1 bis 11, wobei:

- der Initialdehnungsmodul des thermoplastischen Materials, gemessen bei 20 °C, zwischen 500 und 2500 MPa liegt, vorzugsweise zwischen 500 und 1500 MPa;
- die elastische Dehnung des thermoplastischen Materials, gemessen bei 20 °C, größer ist als 5 %, vorzugsweise größer als 8 %; und

- die Reißdehnung des thermoplastischen Materials, gemessen bei 20 °C, größer ist als 10 %, vorzugsweise größer als 15 %.

**13.** Multiverbundstoff-Verstärkung nach einem der Ansprüche 1 bis 12, wobei die mit $A_{(R)}$ bezeichnete Reißdehnung, gemessen bei 20 °C, der Multiverbundstoff-Verstärkung größer oder gleich 3,0 % ist, vorzugsweise größer oder gleich 3,5 %, und wobei der mit $E_{(R)}$ bezeichnete Initialdehnungsmodul, gemessen bei 20 °C, der Multiverbundstoff-Verstärkung größer als 9 GPa ist, vorzugsweise größer als 12 GPa.

**14.** Luftreifen oder Nicht-Luftreifen, umfassend eine Multiverbundstoff-Verstärkung nach einem der Ansprüche 1 bis 13.

**15.** Reifen nach Anspruch 14, wobei die Multiverbundstoff-Verstärkung im Gürtel des Reifens, in der Karkassenbewehrung oder im Wulstbereich des Reifens vorhanden ist.

## Claims

**1.** Multicomposite reinforcer (**R1, R2**) comprising one or more monofilament(s) **(10)** made of glass-resin composite (GRC) comprising glass filaments **(101)** embedded in a crosslinked resin **(102),** the glass transition temperature of which is denoted $\mathbf{Tg_1}$**, characterized in that**:

- a layer of a thermoplastic material **(12),** the glass transition temperature of which, denoted $\mathbf{Tg_2}$, measured according to standard ASTM D3418 of 1999, is greater than 20°C, covers said monofilament or, if there are several, individually covers each monofilament or collectively covers all or at least some of the monofilaments;
- said monofilament or, if there are several, all or at least some of the monofilaments has the following features:

  - a temperature $\mathbf{Tg_1}$, measured according to standard ASTM D3418 of 1999, equal to or greater than 190°C;
  - an elongation at break, denoted $\mathbf{A_{(M)}}$, measured at 20°C and according to standard ASTM D638, equal to or greater than 4.0%; and
  - an initial tensile modulus, denoted $\mathbf{E_{(M)}}$, measured at 20°C and according to standard ASTM D638, greater than 35 GPa.

**2.** Multicomposite reinforcer according to Claim 1, in which $\mathbf{Tg_1}$ is greater than 195°C, preferably greater than 200°C, and in which $\mathbf{Tg_2}$ is greater than 50°C, preferably greater than 70°C.

**3.** Multicomposite reinforcer according to any one of Claims 1 or 2, in which $\mathbf{A_{(M)}}$ is greater than 4.2%, preferably greater than 4.4%, and $\mathbf{E_{(M)}}$ is greater than 40 GPa, preferably greater than 42 GPa.

**4.** Multicomposite reinforcer according to any one of Claims 1 to 3, in which said monofilament or, if there are several, all or at least some of the monofilaments has a real part of the complex modulus, denoted $\mathbf{E'_{190(M)}}$, measured at 190°C by the Dynamical Mechanical Thermal Analysis method, which is greater than 30 GPa.

**5.** Multicomposite reinforcer according to any one of Claims 1 to 4, in which the ratio $\mathbf{E'_{(Tg2'-25)(M)}} / \mathbf{E'_{20(M)}}$ is greater than 0.85, preferably greater than 0.90, $\mathbf{E'_{20(M)}}$ and $\mathbf{E'_{(Tg2'-25)(M)}}$ being the real part of the complex modulus of said monofilament or, if there are several, all or at least some of the monofilaments, measured by the Dynamical Mechanical Thermal Analysis method, respectively at 20°C and at a temperature expressed in °C equal to ($\mathbf{Tg_2'}$ - 25), and $\mathbf{Tg_2'}$ being the glass transition temperature of the resin measured by the Dynamical Mechanical Thermal Analysis method.

**6.** Multicomposite reinforcer according to any one of Claims 1 to 5, in which the ratio $\mathbf{E'_{(Tg2'-10)(M)}} / \mathbf{E'_{20(M)}}$ is greater than 0.80, preferably greater than 0.85, $\mathbf{E'_{20(M)}}$ and $\mathbf{E'_{(Tg2'-10)(M)}}$ being the real part of the complex modulus of said monofilament or, if there are several, all or at least some of the monofilaments, measured by the Dynamical Mechanical Thermal Analysis method, respectively at 20°C and at a temperature expressed in °C equal to **(**$\mathbf{Tg_2'}$ - 10), and $\mathbf{Tg_2'}$ being the glass transition temperature of the resin measured by the Dynamical Mechanical Thermal Analysis method.

**7.** Multicomposite reinforcer according to any one of Claims 1 to 6, in which said monofilament or, if there are several, all or at least some of them has:

- a compressive elastic deformation in bending which is greater than 3.0%, preferably greater than 3.5%; and
- a compressive breaking stress in bending which is greater than 1 000 MPa, preferably greater than 1 200 MPa.

**8.** Multicomposite reinforcer according to any one of Claims 1 to 7, in which said monofilament or, if there are several, all or at least some of them has a weight content of glass filaments that is between 60% and 80%, and a density which is between 1.8 and 2.1 g/$cm^3$.

**9.** Multicomposite reinforcer according to any one of Claims 1 to 8, in which the crosslinked resin **(102)** of said monofilament or, if there are several, all or at least some of the monofilaments is a vinyl ester resin, having preferably an initial tensile modulus, measured at 20°C, which is greater than 3.0 GPa.

**10.** Multicomposite reinforcer according to any one of Claims 1 to 9, in which the diameter, denoted $\mathbf{D_M}$, of said monofilament or of each monofilament if there are several is between 0.2 and 2.0 mm, preferably between 0.3 and 1.5 mm, and the minimal thickness, denoted $\mathbf{E_m}$, of the layer of thermoplastic material covering said monofilament or each monofilament if there are several, is between 0.05 and 0.5 mm, preferably between 0.1 and 0.4 mm.

**11.** Multicomposite reinforcer according to any one of Claims 1 to 10, in which the thermoplastic material is a polymer or a polymer composition, the polymer being preferably selected from the group consisting of polyamides, polyesters, polyimides and mixtures of such polymers.

**12.** Multicomposite reinforcer according to any one of Claims 1 to 11, in which:

- the initial tensile modulus of the thermoplastic material, measured at 20°C, is between 500 and 2500 MPa, preferably between 500 and 1500 MPa;
- the elastic elongation of the thermoplastic material, measured at 20°C, is greater than 5%, preferably greater than 8%; and
- the elongation at break of the thermoplastic material, measured at 20°C, is greater than 10%, preferably greater than 15%.

**13.** Multicomposite reinforcer according to any one of Claims 1 to 12, of which the elongation at break denoted $\mathbf{A_{(R)}}$, measured at 20°C, of the multicomposite reinforcer is equal to or greater than 3.0%, preferably equal to or greater than 3.5%, and of which the initial tensile modulus denoted $\mathbf{E_{(R)}}$, measured at 20°C, of the multicomposite reinforcer is greater than 9 GPa, preferably greater than 12 GPa.

**14.** Pneumatic or non-pneumatic tyre comprising a multicomposite reinforcer according to any one of Claims 1 to 13.

**15.** Tyre according to Claim 14, the multicomposite reinforcer being present in the belt of the tyre, in the carcass reinforcement or in the bead zone of the tyre.

**Fig. 1**

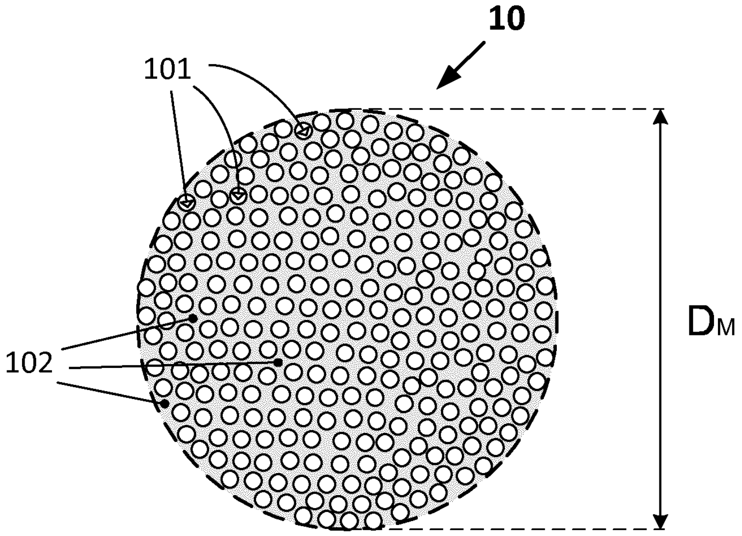


**Fig. 2**

Fig. 2a

Fig. 2b

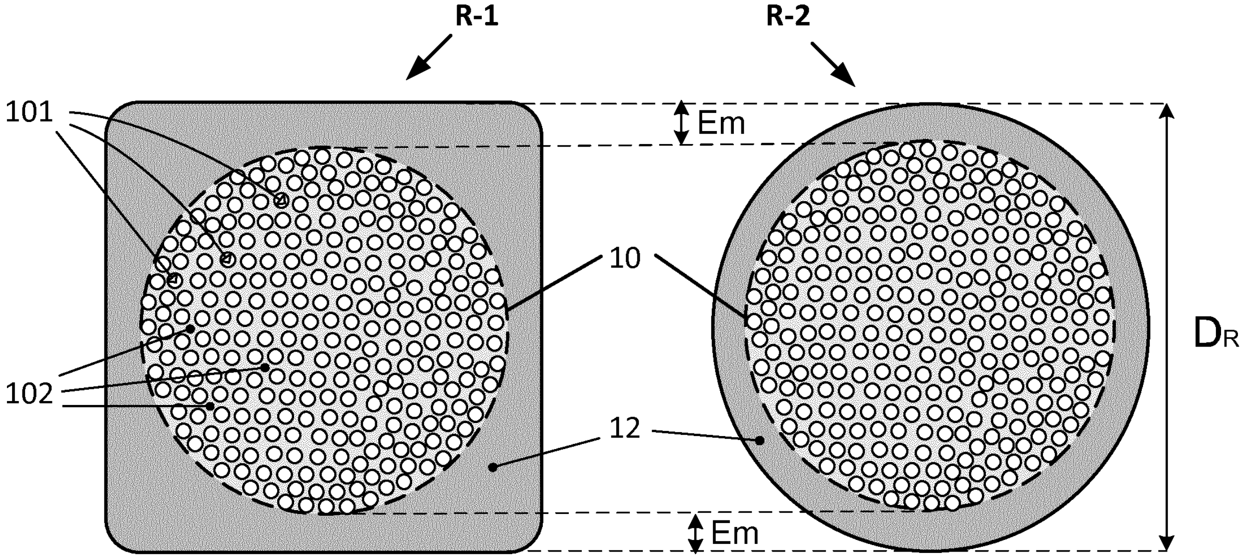

**Fig. 3**

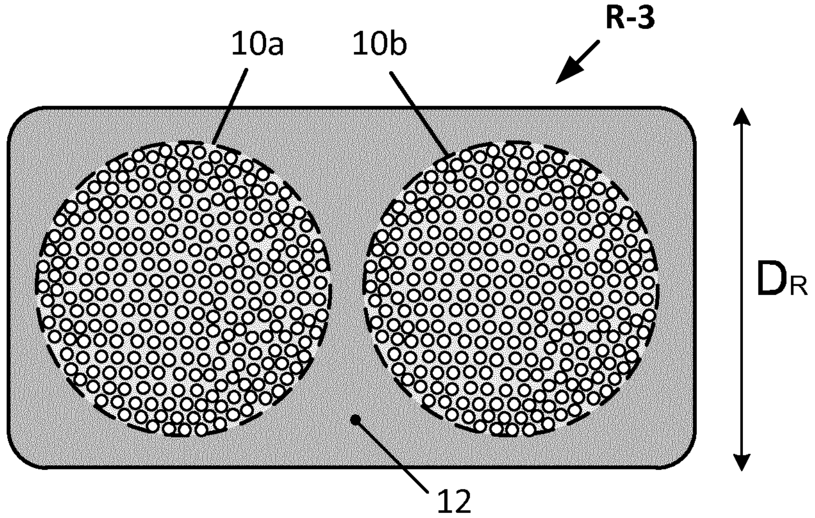


**Fig. 4**

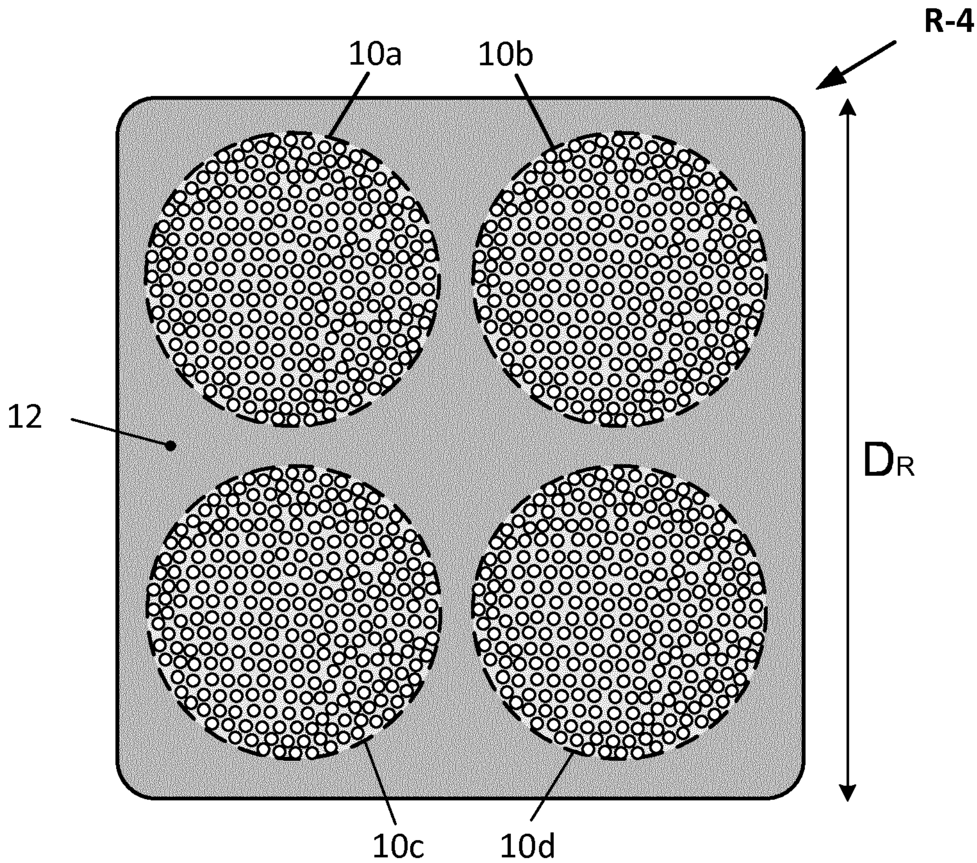

**Fig. 5**

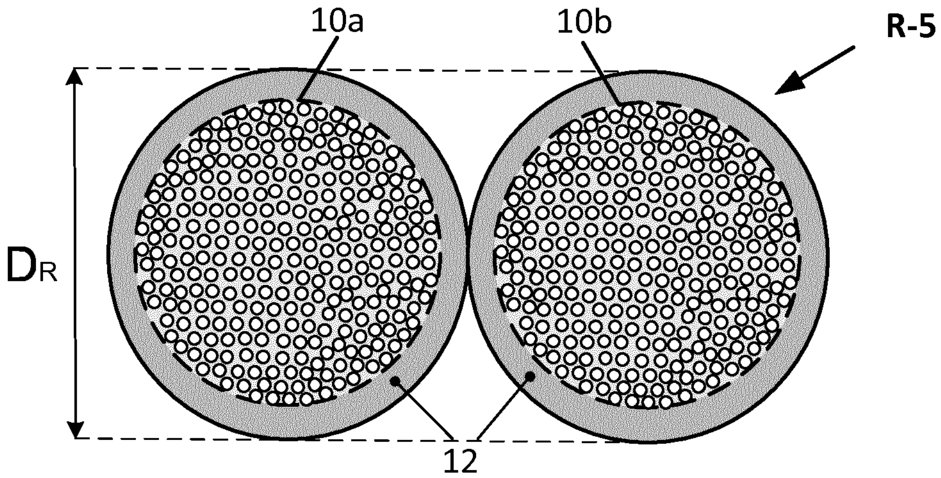


**Fig. 6**

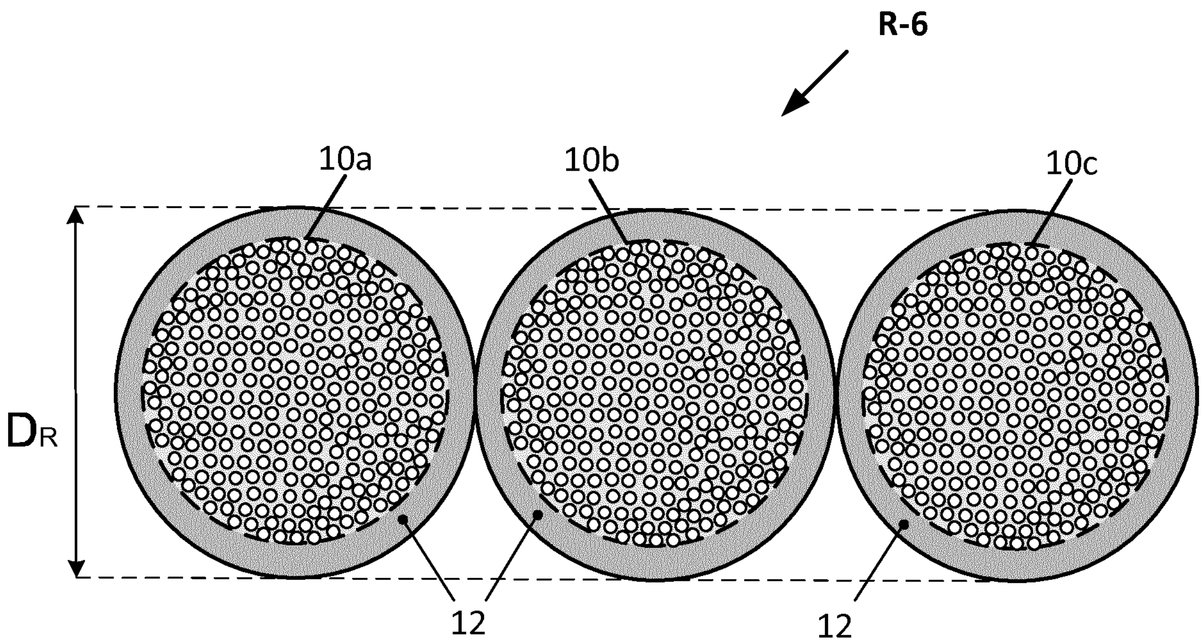

**Fig. 7**

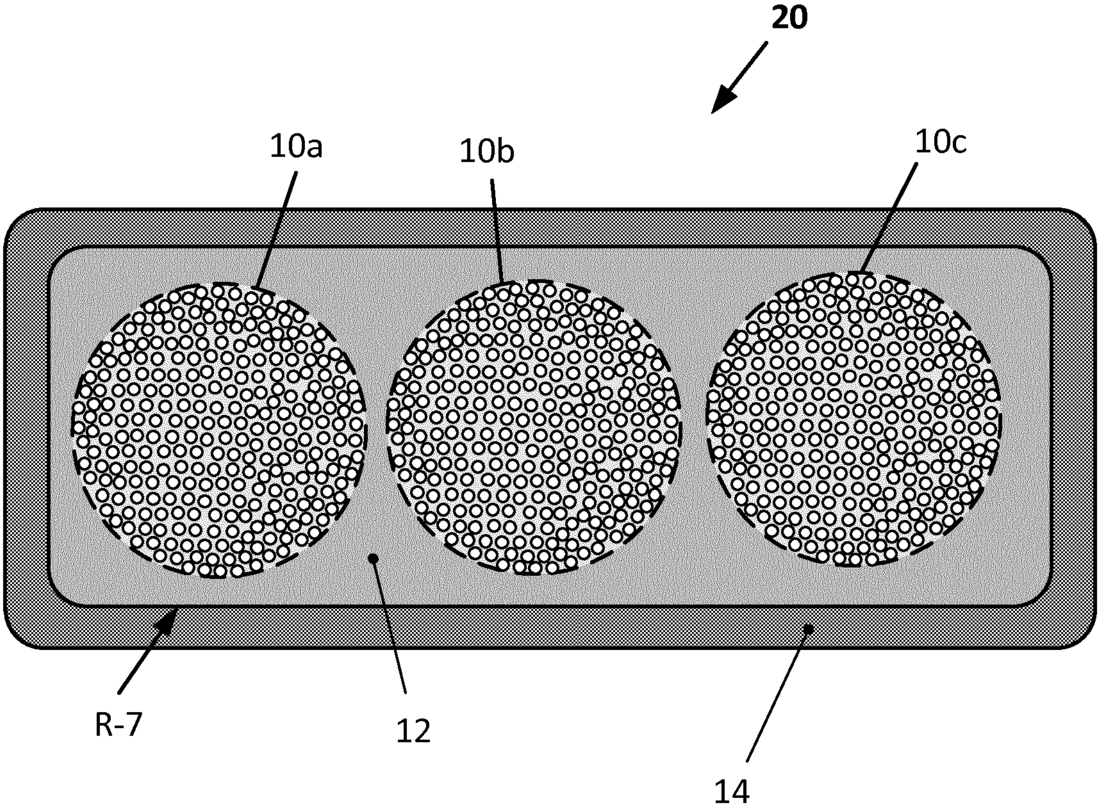

**Fig. 8**

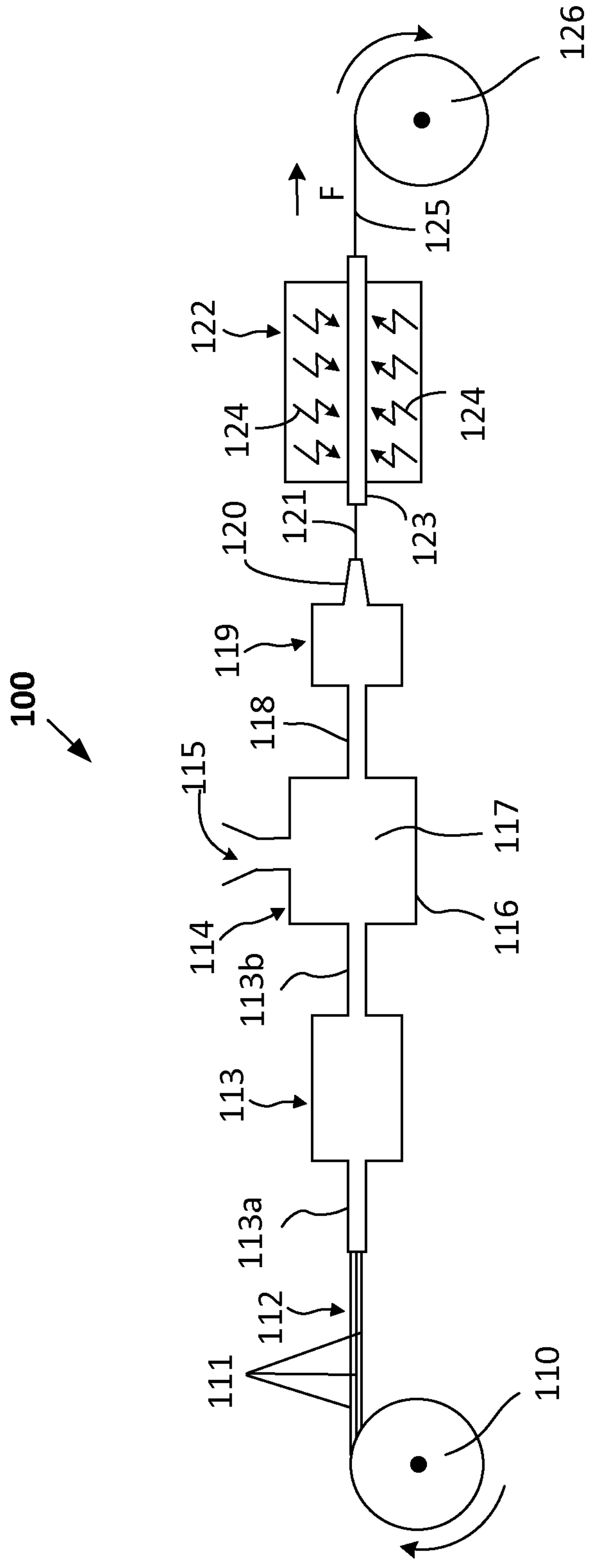
100
110
111
112
113a
113
113b
114
115
116
117
118
119
120
121
122
123
124
124
125
F
126

**Fig. 9**

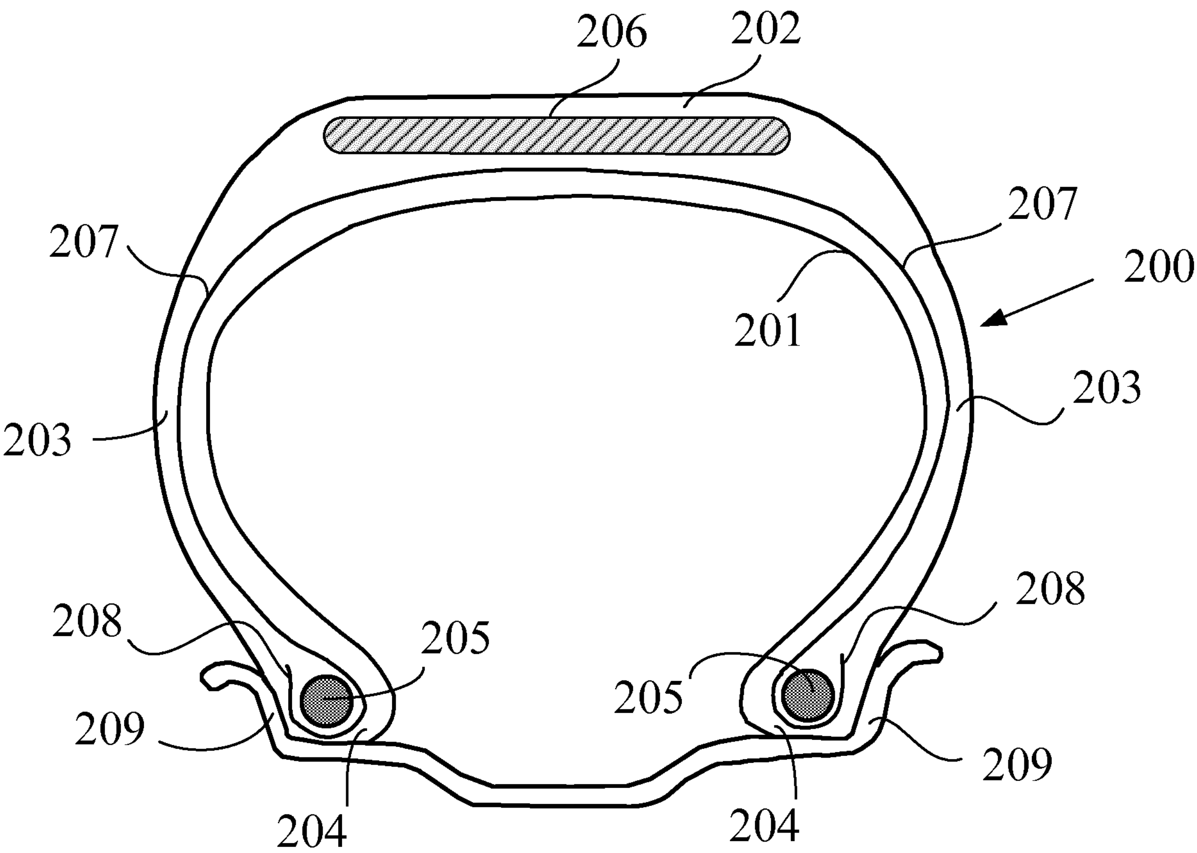

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1167080 A
- US 7032637 B
- WO 2015014578 A
- WO 2015165777 A
- EP 1242254 A
- US 6769465 B
- EP 1359028 A
- US 6994135 B
- US 7201194 B
- WO 0037269 A
- US 6640859 B
- WO 2007085414 A
- WO 2008080535 A
- WO 2009033620 A
- WO 2009135561 A
- WO 2012032000 A
- EP 1074369 A
- EP 1174250 A
- WO 2013117474 A
- WO 2013117475 A
- WO 2013017421 A
- WO 2013017422 A
- WO 2013017423 A


### Littérature non-brevet citée dans la description


- **T.B. RHYNE ; S.M. CRON.** Tire Science and Technology. *TSTCA,* Juillet 2006, vol. 34 (3), 150-169
- **D. INCLAIR.** *J. App. Phys.,* 1950, vol. 21, 380
- **DE THOMPSON et al.** Critical compressive stress for continuous fiber unidirectional composites. *Journal of Composite Materials,* vol. 46 (26), 3231-3245